(19) Europäisches Patentamt
European Patent Office
Office européen des brevets

(11) **EP 4 527 517 A1**

(12) **EUROPEAN PATENT APPLICATION**
published in accordance with Art. 153(4) EPC

(43) Date of publication:
26.03.2025 Bulletin 2025/13

(21) Application number: 23807723.4

(22) Date of filing: 19.05.2023

(51) International Patent Classification (IPC):
$B21D\ 22/20^{(2006.01)}$    $C21D\ 9/00^{(2006.01)}$
$C21D\ 9/50^{(2006.01)}$    $C22C\ 38/00^{(2006.01)}$
$C22C\ 38/60^{(2006.01)}$    $C21D\ 1/18^{(2006.01)}$
$C21D\ 1/70^{(2006.01)}$    $C23C\ 2/12^{(2006.01)}$
$C23C\ 2/26^{(2006.01)}$    $C23C\ 26/00^{(2006.01)}$

(52) Cooperative Patent Classification (CPC):
B21D 22/20; C21D 1/18; C21D 1/70; C21D 9/00;
C21D 9/50; C22C 38/00; C22C 38/60; C23C 2/12;
C23C 2/26; C23C 26/00

(86) International application number:
PCT/JP2023/018802

(87) International publication number:
WO 2023/224122 (23.11.2023 Gazette 2023/47)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 19.05.2022 JP 2022082168

(71) Applicant: NIPPON STEEL CORPORATION
Chiyoda-ku
Tokyo 100-8071 (JP)

(72) Inventors:
• FUJITA, Soshi
Tokyo 100-8071 (JP)
• SUZUKI, Yuki
Tokyo 100-8071 (JP)
• MAKI, Jun
Tokyo 100-8071 (JP)
• IRIKAWA, Hideaki
Tokyo 100-8071 (JP)

(74) Representative: Vossius & Partner
Patentanwälte Rechtsanwälte mbB
Siebertstrasse 3
81675 München (DE)

(54) **LAYERED BLANK FOR HOT STAMPING AND LAYERED HOT STAMP MOLDED BODY**

(57) To improve both the slow temperature increasing rate of an overlapped part and the difference in temperature increasing rate between an overlapped part and a one-sheet part when an Al-based plated steel sheet is used as a raw material. An overlapped blank for hot stamping according to the present invention includes: a first Al-based plated steel sheet having a sheet thickness t1; and a second Al-based plated steel sheet having a sheet thickness t2, the second Al-based plated steel sheet overlapped and welded on the first steel sheet, having a smaller area than the first steel sheet, and including a carbon-based black coating as an upper layer of an Al-based plated layer on the side not in contact with the first Al-based plated steel sheet, in which the overlapped blank for hot stamping satisfies (1) Expression to (5) Expression.

**[FIG. 3]**

EP 4 527 517 A1

## Description

[Technical Field]

The present invention relates to an overlapped blank for hot stamping and an overlapped hot stamped component.

[Background Art]

In recent years, a steel sheet that achieves both high strength and high formability has been demanded in the application of steel sheets for an automobile. One example corresponding to the steel sheet that achieves both high strength and high formability is a TRIP (Transformation Induced Plasticity) steel using martensite transformation of retained austenite. A high-strength steel sheet excellent in formability and having a strength of about 1000 MPa class can be manufactured with the TRIP steel. However, it is difficult to ensure formability in ultrahigh-strength steel having a higher strength (for example, 1500 MPa or more) using the technique of the TRIP steel, and further, there is a problem of poor shape fixability after forming and inferiority in dimensional accuracy of a formed product.

In contrast to the construction method of forming near room temperature (what is called a cold press construction method) as described above, a construction method recently attracting attention is hot stamping (also called hot press, hot pressing, die-quenching, press quenching, or the like). This hot stamping is a method of manufacturing a part to obtain a material quality of a desired high strength after pressing by heating a steel sheet up to an Ac3 point or higher (for example, 800°C or higher) to make it into austenite and immediately thereafter pressing it in hot working to thereby ensure formability, and rapidly cooling it down to an Ms point or lower (for example, 400°C or lower) by a metal mold during keeping it at a bottom dead center to make the material into martensite to thereby quench it. By this construction method, an automobile part excellent also in shape fixability after forming can be obtained.

On the other hand, various press-molded bodies used for parts forming the vehicle body of the automobile have been required to be improved in a wide variety of performances and characteristics from the various viewpoints such as static strength, dynamic strength, collision safety, and weight saving. For example, an automobile part such as A-pillar reinforce, B-pillar reinforce, bumper reinforce, tunnel reinforce, side sill reinforce, roof reinforce, or floor cross member is required to have a collision resistant property only at a specific site of each automobile part more than a general site except the specific site.

Hence, a construction method of overlapping and welding a plurality of steel sheets only at a portion corresponding to the specific site requiring reinforcement of the automobile part and then hot stamping the obtained steel sheet to manufacture an overlapped hot stamped component has been actually employed since about 2007 (refer to Patent Document 1 and Patent Document 2). This construction method can partially reinforce only the specific site of the overlapped hot stamped component while reducing the number of press metal molds, and can contribute also to a reduction in weight of the part because the part thickness is not unnecessarily increased. Incidentally, the blank fabricated by overlapping and welding steel sheets as above is called an overlapped blank (also called a patch work blank).

In the case where the steel sheets to be overlapped are non-plated steel sheets, oxide scales are generated on the surface of an overlapped hot-pressed member to be manufactured due to high-temperature heating accompanying the hot pressing. Therefore, a problem is that there is a need to remove the generated oxide scales, for example, by shot blast processing after the hot pressing or that the corrosion resistance of the manufactured overlapped hot-pressed member is likely to decrease. Further, a problem peculiar to the case of using the non-plated steel sheets as a raw material of the overlapped blank is that a non-overlapped portion (also called "one-sheet part" below) can be subjected to the shot blast processing but removal of the oxide scales formed between the steel sheets at an overlapped portion (also called "overlapped part" below) by the shot blast processing is difficult, and particularly the corrosion resistance is likely to decrease.

If the steel sheets to be overlapped are plated steel sheets, the need to perform the shot blast processing on the overlapped hot-pressed member after the hot pressing is eliminated. General examples of the plated steel sheet used for hot pressing include a Zn-based plated steel sheet and an Al-based plated steel sheet. Regarding both of Zn-based plating and Al-based plating, the Zn-based plating becomes Zn-Fe-based plating and the Al-based plating becomes Al-Fe-based plating after hot stamping heating by the alloying reaction of Fe diffusing into the plating.

As described in Patent Document 2 and Patent Document 3, a Zn-based plated steel sheet (namely, a plated steel sheet containing 50 mass% or more of Zn (Zn plating or Zn-based alloy plating of a Zn-Fe alloy, a Zn-Ni alloy, or a Zn-Fe-Al alloy)) suppresses the generation of the oxide scales to eliminate the problem of the need for the shot blast processing. However, in the case of using the Zn-based plated steel sheet as a raw material of the overlapped blank and performing bending on the overlapped part during the hot stamping, cracks occur in a base iron to cause a problem in the collision resistant property in some cases. This is because when zinc relatively low in melting point remains, Zn becomes a liquid metal and intrudes from the plating surface into the base iron, due to a problem of so-called liquid-metal embrittlement. Incidentally, the bending is a means for ensuring the collision resistant property in terms of a shape, and performing the bending on the overlapped part is a very important using method of the overlapped component.

As described in Patent Document 2 and Patent Document 3, general examples of the measure for the liquid-metal embrittlement employed in the case of using the Zn-based plated steel sheet as the hot stamp include a measure of increasing the melting point of the plating by promoting the Zn-Fe alloying reaction during the hot stamping heating and a measure of waiting for solidification of zinc by reducing the forming temperature during the bending of the hot stamping. However, a problem peculiar to the case of using the zinc-based plated steel sheet as a raw material of the overlapped blank is a problem that the overlapped part is larger in sheet thickness than the one-sheet part and therefore has a slow temperature increasing rate and it is difficult to promote the Zn-Fe alloying reaction during the hot stamping heating. Further, regarding the forming temperature during the hot stamping, since the sheet thickness of the overlapped part is thicker than that of the one-sheet part, the cooling rate is also slow, and there is also a problem of the one-sheet part early cooling when waiting for the overlapped part to cool, failing to ensure the martensite structure. Further, Zn becomes a film of zinc oxide to suppress the evaporation of Zn at the one-sheet part, but deficiency of oxygen occurs in an atmosphere between the steel sheets at the overlapped part and therefore Zn evaporates, resulting in that the problems in a decrease in corrosion resistance and in liquid-metal embrittlement at the overlapped part become more serious.

Such an Al-based plated steel sheet as disclosed in Patent Document 4 (namely, a plated steel sheet containing 50 mass% or more of Al (Al plating or Al-based alloy plating of an Al-Si alloy or an Al-Fe-Si alloy)) suppresses the generation of the oxide scales as with Zn to eliminate the problem of the need for the shot blast processing and further causes no problem in the liquid-metal embrittlement with Al, which has a higher melting point than Zn. Thus, the Al-based plated steel sheet is suitable for use as a raw material of the overlapped blank.

Thus, in recent years, the present inventors have conducted extensive studies on the Al-based plated steel sheet for the overlapped blank and the overlapped blank using the Al-based plated steel sheet, and have made various proposals (for example, see Patent Document 5 to Patent Document 8 below).

[Prior Art Document]

[Patent Document]

[Patent Document 1] Japanese Laid-open Patent Publication No. 2011-88484
[Patent Document 2] Japanese Patent No. 6178301
[Patent Document 3] Japanese Laid-open Patent Publication No. 2016-124029
[Patent Document 4] International Publication No. WO 2002/103073
[Patent Document 5] International Publication No. WO 2019/194308
[Patent Document 6] Japanese Laid-open Patent Publication No. 2011-149084
[Patent Document 7] International Publication No. WO 2010/005121
[Patent Document 8] International Publication No. WO 2021/172379

[Disclosure of the Invention]

[Problems to Be Solved by the Invention]

However, as the problem peculiar to the case of using such an Al-based plated steel sheet as disclosed in Patent Document 4 as a raw material of the overlapped blank, the slow temperature increasing rate of the overlapped part during hot stamping heating and the difference in temperature increasing rate between the overlapped part and the non-overlapped part (one-sheet part) cause a problem that the productivity of parts of hot stamping decreases, as well as a problem of spot weldability.

That is, it is necessary to increase the heating time so that the overlapped part reaches the austenitizing temperature or higher, which causes a problem of low productivity of parts. In particular, in the case of the steel sheet having no Al-based plating (namely, when the steel sheet surface is Fe), Fe oxidizes and the steel sheet turns black, and in the case of the Zn-based plating, the Zn-Fe alloying reaction progresses more easily than in the Al-based plating, causing the metallic luster to disappear and the steel sheet to turn black. In contrast to these steel sheets, in the Al-based plated steel sheet, the surface has a silver-gray metallic luster and further the Al-based plating has excellent oxidation resistance, and thus the metallic luster is maintained for a long time during heating, resulting in that the temperature increasing rate becomes slower. As a result, the problem that the productivity of parts of hot stamping decreases is likely to occur.

Further, as described in Patent Document 3, the Al-Fe alloying reaction in the plating of the Al-based plated steel sheet that progresses by the hot stamping heating is important for the spot weldability of the plating. Here, when the heating time for hot stamping is prolonged, the Al-Fe alloying reaction progresses excessively at the one-sheet part of the steel sheet, resulting in that an Al-Fe-based alloy plated layer with a high Fe concentration is formed. As a result, a further problem arises in that the spot weldability decreases at the one-sheet part of the steel sheet.

Therefore, in order to suppress the oxide scales of the base iron and prevent the problem of liquid-metal embrittlement as explained above, it is desired to solve the problems of the productivity of parts of hot stamping and the spot weldability at the one-sheet part by the invention that improves both the slow temperature increasing rate of the overlapped part and the difference in temperature increasing rate between the overlapped part and the one-sheet part regarding the Al-based plated steel sheet suitable for use as a raw material of the overlapped blank for hot stamping. There has been still room for improvement also in the techniques described in Patent Document 5 to Patent Document 8 described above regarding the problems of the productivity of parts of hot stamping and the spot weldability at the one-sheet part.

Hence, the present invention has been made in consideration of the above problems, and an object of the present invention is to provide an overlapped blank for hot stamping and an overlapped hot stamped component that are capable of improving both the slow temperature increasing rate of an overlapped part and the difference in temperature increasing rate between an overlapped part and a one-sheet part when an Al-based plated steel sheet is used as a raw material.

[Means for Solving the Problems]

The present inventors conducted a diligent study repeatedly to solve the above problems and focused on lightness $L^*$ defined in JIS Z 8781-4 for the surface of an Al-based plated steel sheet, and consequently, confirmed that lower lightness increases the temperature increasing rate of hot stamping heating of the Al-based plated steel sheet. This is thought to be because a lower value of the lightness suggests that the surface of the Al-based plated steel sheet is blackened, and thus characteristics that easily absorb heat are obtained. In particular, they found that in order to improve the slow temperature increasing rate of the overlapped part of a patch work, it is important to relatively reduce the lightness of the overlapped part relative to the sheet thickness of the overlapped part (namely, the total of the thicknesses of the two steel sheets). Further, they found that in order to improve the difference in temperature increasing rate between the overlapped part and the one-sheet part, it is important to make a difference in lightness between the overlapped part and the one-sheet part (namely, the lightness of the surface should be lower at a thicker overlapped part, and conversely, the lightness of the surface should be higher at the one-sheet part).

Further, they found that using the Al-based plated steel sheet makes it possible to obtain high lightness due to the surface having a silver-gray metallic luster, and furthermore, increasing the thickness of an Al-based plated layer makes it possible to suppress the blackening of the plated surface caused by alloying of the plating reaching the surface, resulting in that high lightness can be maintained even during the hot stamping heating.

Further, they found that using a carbon-based black coating for the upper layer of the Al-based plated steel sheet makes it possible to reduce the lightness. In particular, they found that the carbon-based black coating is burned off by combustion by the oxidation reaction during the hot stamping heating, thus making it possible to suppress the decrease in spot weldability of the overlapped hot stamp molded part caused by the remaining carbon-based black coating.

The gist of the present invention completed based on the above-described findings is as follows.

[1] An overlapped blank for hot stamping includes: a first Al-based plated steel sheet having a sheet thickness t1; and a second Al-based plated steel sheet having a sheet thickness t2, the second Al-based plated steel sheet overlapped and welded on the first steel sheet, having a smaller area than the first steel sheet, and including a carbon-based black coating as an upper layer of an Al-based plated layer on the side not in contact with the first Al-based plated steel sheet, in which the overlapped blank for hot stamping satisfies (1) Expression to (5) Expression below.

$$14.0 \le (L^*1 - L^*2) \times (W1/W2)^2 \le 32.0 ... \text{Expression (1)}$$

$$0.86 \le \{t1/(t1 + t2)\} \times (L^*1/L^*2)^2 ... \text{Expression (2)}$$

$$20 \le W1a \le 120 \qquad ... \text{Expression (3)}$$

$$20 \le W1b \le 120 \qquad ... \text{Expression (4)}$$

$$20 \leq W2b \leq 120 \qquad \text{...Expression(5)}$$

Here, the following are set.

$$W1 = 0.5 \times (W1a + W1b)$$

$$W2 = 0.5 \times (W1b + W2b)$$

$$L*1 = 0.5 \times (L*1a + L*1b)$$

$$L*2 = 0.5 \times (L*1b + L*2b)$$

W1a: a coating weight of an Al-based plated layer on the surface of the side in contact with the second Al-based plated steel sheet of the first Al-based plated steel sheet

W1b = a coating weight of an Al-based plated layer on the surface of the side not in contact with the second Al-based plated steel sheet of the first Al-based plated steel sheet

W2b = a coating weight of an Al-based plated layer on the surface of the side not in contact with the first Al-based plated steel sheet of the second Al-based plated steel sheet

L*1a: lightness L* of the surface on the side in contact with the second Al-based plated steel sheet of the first Al-based plated steel sheet

L*1b: lightness L* of the surface on the side not in contact with the second Al-based plated steel sheet of the first Al-based plated steel sheet

L*2b: lightness L* of the surface on the side not in contact with the first Al-based plated steel sheet of the second Al-based plated steel sheet

Incidentally, the units of t1 and t2 are mm, and the units of W1a, W1b, W2a, and W2b are g/m$^2$.

[2] The overlapped blank for hot stamping according to [1], satisfying Expression (6) below.

$$14.0 \leq (L*1 - L*2) \times (W1/W2)^2 \leq 30.0 \text{...Expression (6)}$$

[3] The overlapped blank for hot stamping according to [1] or [2], in which the first Al-based plated steel sheet includes a carbon-based black coating as an upper layer of the Al-based plated layer on the side not in contact with the second Al-based plated steel sheet.

[4] The overlapped blank for hot stamping according to any one of [1] to [3], in which a film thickness of the carbon-based black coating is 0.3 to 10.0 $\mu$m.

[5] The overlapped blank for hot stamping according to any one of [1] to [4], in which a total of a Zn content, a Ti content, a Cu content, and a V content of the carbon-based black coating is 0.2 to 3.0 g/m$^2$.

[6] The overlapped blank for hot stamping according to any one of [1] to [4], further includes: a layer with a total of a Zn content, a Ti content, a Cu content, and a V content of 0.2 to 3.0 g/m$^2$ at an upper layer of the Al plated layer.

[7] The overlapped blank for hot stamping according to any one of [1] to [6], in which a nitrogen content of the carbon-based black coating is 2 to 18 mass%.

[8] An overlapped hot stamped component includes: a first Al-Fe-based alloy plated steel sheet having a sheet thickness T1; and a second Al-Fe-based alloy plated steel sheet having a sheet thickness T2, the second Al-Fe-based alloy plated steel sheet overlapped and welded on the first Al-Fe-based alloy plated steel sheet and having a smaller area than the first Al-Fe-based alloy plated steel sheet, in which the overlapped hot stamped component satisfies relationships of Expression (7) to Expression (9) below.

$$25 \leq K1 \leq 60 \text{...Expression (7)}$$

$$25 \leq K2 \leq 60 \text{...Expression (8)}$$

$$0 \leq (D1 - D2) \times (K1/K2)^2 \leq 5.0...\text{Expression (9)}$$

Here, the following are set.

K1: an average value of a plating thickness of an Al-Fe-based alloy plated layer on the side in contact with the second Al-Fe-based alloy plated steel sheet and a plating thickness of an Al-Fe-based alloy plated layer on the side not in contact with the second Al-Fe-based alloy plated steel sheet at a non-overlapped part of the first Al-Fe-based alloy plated steel sheet

K2: a plating thickness of an Al-Fe-based alloy plated layer on the side not in contact with the first Al-Fe-based alloy plated steel sheet at an overlapped part of the second Al-Fe-based alloy plated steel sheet

D1: an average value of a thickness of a diffusion layer located to be in contact with a steel sheet base in the Al-Fe-based alloy plated layer on the side in contact with the second Al-Fe-based alloy plated steel sheet and a thickness of a diffusion layer located to be in contact with a steel sheet base in the Al-Fe-based alloy plated layer on the side not in contact with the second Al-Fe-based alloy plated steel sheet in the first Al-Fe-based alloy plated steel sheet

D2: a thickness of a diffusion layer located to be in contact with a steel sheet base in the Al-Fe-based alloy plated layer on the side not in contact with the first Al-Fe-based alloy plated steel sheet of the second Al-Fe-based alloy plated steel sheet

Incidentally, the units of the sheet thickness T1 and the sheet thickness T2 are mm, and the units of the K1, the K2, the D1, and the D2 are $\mu$m.

[9] The overlapped hot stamped component according to [8], in which a layer with a total of a Zn content, a Ti content, a Cu content, and a V content of 0.2 to 3.0 $g/m^2$ is located on the Al-Fe-based alloy plated layer on the face of the side not in contact with the first Al-Fe-based alloy plated steel sheet in the second Al-Fe-based alloy plated steel sheet, and

further, a layer with a total of a Zn content, a Ti content, a Cu content, and a V content of 0 to 3.0 $g/m^2$ is located on the Al-Fe-based alloy plated layer on the face of the side not in contact with the second Al-Fe-based alloy plated steel sheet in the first Al-Fe-based alloy plated steel sheet.

[Effect of the Invention]

As explained above, according to the present invention, when the Al-based plated steel sheet is used as a raw material of the overlapped blank for hot stamping, it is possible to improve both the slow temperature increasing rate of the overlapped part and the difference in temperature increasing rate between the overlapped part and the one-sheet part, and to solve the problems of the part productivity of the hot stamped component and the spot weldability of the one-sheet part.

[Brief Description of the Drawings]

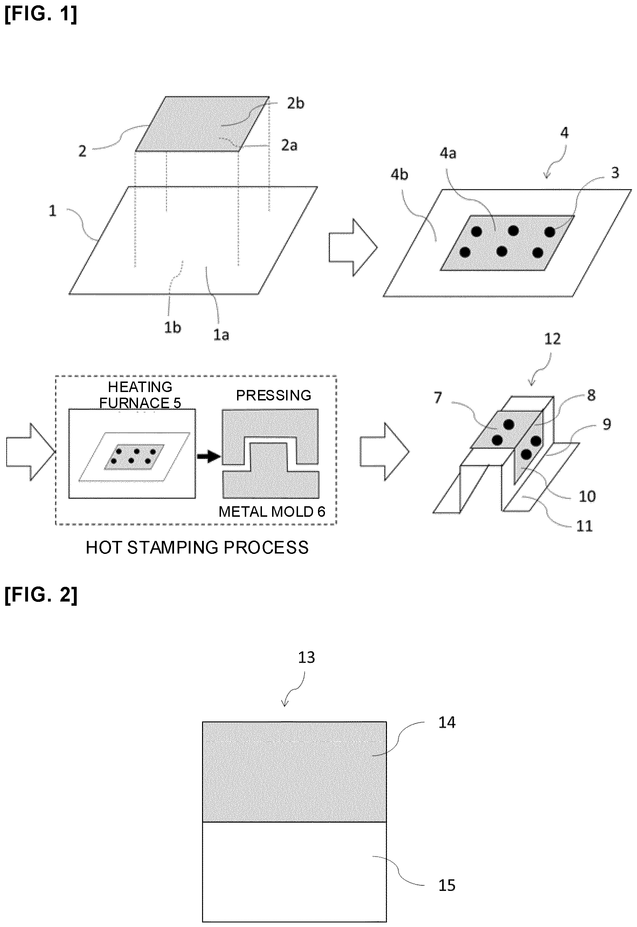

[FIG. 1] FIG. 1 is an explanatory view schematically illustrating examples of an overlapped blank for hot stamping, a method of manufacturing an overlapped hot stamped component, and an overlapped hot stamped component according to an embodiment of the present invention.

[FIG. 2] FIG. 2 is an explanatory view schematically illustrating a structure of an Al-based plated steel sheet including an Al-based plated layer on a surface of a base material steel sheet of the overlapped blank for hot stamping according to the embodiment.

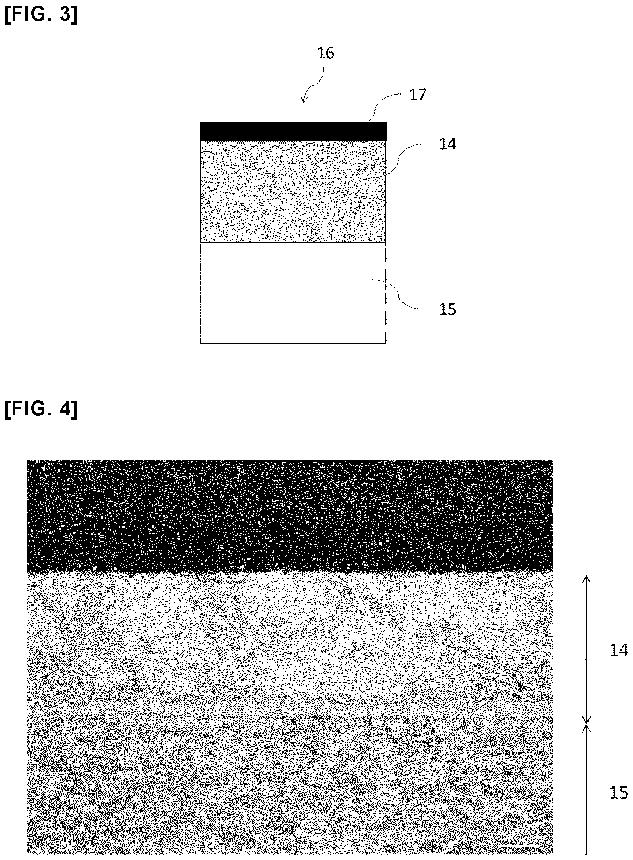

[FIG. 3] FIG. 3 is an explanatory view schematically illustrating a structure of the Al-based plated steel sheet including the Al-based plated layer on the surface of the base material steel sheet, and including a carbon-based black coating or a carbon-based black coating selectively containing Zn, Ti, Cu, or V at an upper layer of the Al-based plated layer of the overlapped blank for hot stamping according to the embodiment.

[FIG. 4] FIG. 4 is a view illustrating a result obtained by observing a cross section of the Al-based plated steel sheet including the Al-based plated layer on the surface of the base material steel sheet of the overlapped blank for hot stamping according to the embodiment using an optical microscope after nital etching.

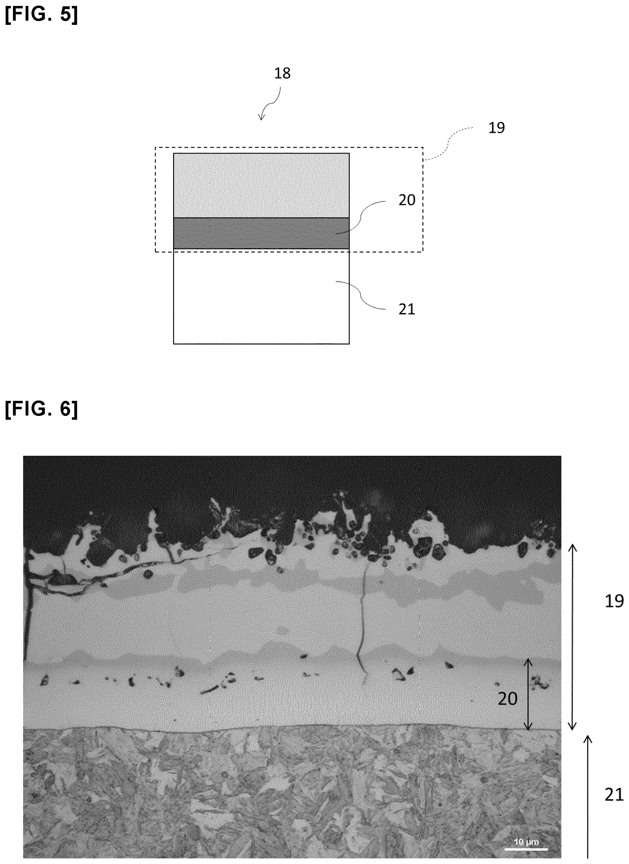

[FIG. 5] FIG. 5 is an explanatory view schematically illustrating a structure of an Al-Fe-based alloy plated steel sheet including an Al-Fe-based alloy plated layer on a surface of a base material steel sheet and including a diffusion layer that is included in the Al-Fe-based alloy plated layer and is in contact with a steel sheet base of the overlapped hot stamped component according to the embodiment.

[FIG. 6] FIG. 6 is a view illustrating a result obtained by observing a cross section of the Al-Fe-based alloy plated steel sheet including the Al-Fe-based alloy plated layer on the surface of the base material steel sheet of the hot stamped component according to the embodiment using an optical microscope after nital etching.

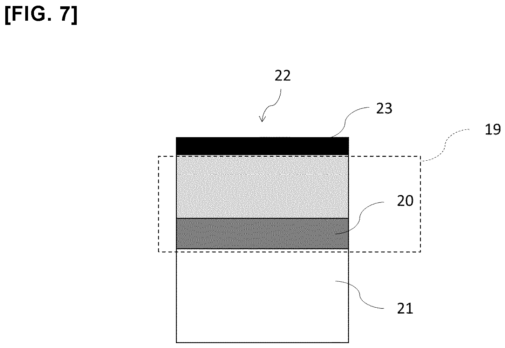

[FIG. 7] FIG. 7 is an explanatory view schematically illustrating a structure of the Al-Fe-based alloy plated steel sheet that includes the Al-Fe-based alloy plated layer (including the diffusion layer) on the surface of the base material steel sheet and includes Zn, Ti, Cu, V at an upper layer of the Al-Fe-based alloy plated layer of the overlapped hot stamped component according to the embodiment.

[Embodiments for Carrying out the Invention]

Preferred embodiments of the present invention will be explained below in detail referring to the accompanying drawings. Incidentally, in the description and the drawings, the same codes are given to components having substantially the same functional configurations to omit duplicated explanation.

FIG. 1 is an explanatory view schematically illustrating examples of an overlapped blank for hot stamping and an overlapped hot stamped component according to an embodiment of the present invention.

The overlapped blank for hot stamping according to this embodiment is a type of tailored blank, and is also called a patch work blank. The overlapped blank for hot stamping according to this embodiment is used as a raw material of the overlapped hot stamped component.

As schematically illustrated in FIG. 1, an overlapped blank for hot stamping 4 according to this embodiment is composed of a first Al-based plated steel sheet 1 and a second Al-based plated steel sheet 2 smaller in area than the first Al-based plated steel sheet 1 by welding 3 them. In this event, a portion of the overlapped blank for hot stamping 4 where the second Al-based plated steel sheet 2 is overlapped is called an overlapped part 4a, and a non-overlapped portion is called a one-sheet part 4b. Incidentally, the second Al-based plated steel sheet 2 of the overlapped blank for hot stamping 4 according to this embodiment is preferably arranged inside relative to an outer edge portion of the first Al-based plated steel sheet 1 so as to prevent a portion of the second Al-based plated steel sheet 2 protruding from the first Al-based plated steel sheet 1 from existing as schematically illustrated in FIG. 1.

Further, on the surface of the first Al-based plated steel sheet 1, an Al-based plated layer is applied to both faces of a face 1a on the side in contact with the second Al-based plated steel sheet 2 and a face 1b on the side not in contact with the second Al-based plated steel sheet 2, and also on the second Al-based plated steel sheet 2, an Al-based plated layer is applied to both faces of a face 2a on the side in contact with the first Al-based plated steel sheet 1 and a face 2b on the side not in contact with the first Al-based plated steel sheet 1. Further, at the face 2b on the side not in contact with the first Al-based plated steel sheet 1 of the second Al-based plated steel sheet 2, a carbon-based black coating (not illustrated) is provided at an upper layer of the Al-based plated layer.

Regarding the overlapped blank for hot stamping 4, as the method of manufacturing the overlapped hot stamped component according to this embodiment, the steel sheets are heated up to an Ac3 point or higher in a heating furnace 5, to thereby be made into austenite, and are press-molded and quenched by a metal mold 6 immediately after taken out of the furnace, and thereby the steel sheets are transformed into martensite. Thus, the overlapped blank for hot stamping 4 becomes an overlapped hot stamped component 12 according to this embodiment excellent in collision resistant property. In this event, at at least a portion of the overlapped part 4a, there exists a portion that becomes a bent part 8 when the overlapped blank for hot stamping 4 becomes the overlapped hot stamped component 12.

In FIG. 1, a formed product using a hat-shaped metal mold is illustrated as an example of the overlapped hot stamped component 12. Here, names of sites of the hot stamped component 12 are a head top part 7, the bent part 8 of the head top part, a vertical wall part 10, a flange part 11, and a bent part 9 of the flange part.

Incidentally, although the second Al-based plated steel sheet 2 according to this embodiment is arranged on the outer side of the head top part 7 side in FIG. 1, the object of the present invention can be achieved even by arranging the second Al-based plated steel sheet 2 on the inner side of the head top part 7.

(1. Overlapped blank for hot stamping)

The overlapped blank for hot stamping 4 according to this embodiment will be explained in detail below.

As described above, the overlapped blank for hot stamping 4 according to this embodiment includes the first Al-based plated steel sheet 1 and the second Al-based plated steel sheet 2 welded to the first Al-based plated steel sheet 1 and smaller in area than the first Al-based plated steel sheet 1, in which Al-based plating is applied to both faces of each of the first Al-based plated steel sheet 1 and the second Al-based plated steel sheet 2. In other words, the first Al-based plated steel sheet 1 and the second Al-based plated steel sheet 2 according to this embodiment are aluminum plated steel sheets each including Al-based plated layers on both surfaces of a base material steel sheet.

<Base material steel sheet>

In the overlapped blank for hot stamping 4 according to this embodiment, the chemical composition of the base material steel sheet in each of the first Al-based plated steel sheet 1 and the second Al-based plated steel sheet 2 is not particularly limited. However, in order to obtain, for example, a tensile strength of 1500 MPa or more (about 400 or more in Vickers hardness (namely, HV1 in JIS Z2244-1: 2020) when a test force is set to 9.8107 N), it is preferable to use a base material steel sheet having a chemical composition composed of, by mass%, C: 0.19 to 0.50%, Si: 0.01 to 1.50%, Mn: 0.4 to 2.0%, Cr: 0.01 to 1.00%, Ti: 0.001 to 0.100%, B: 0.0005 to 0.0100%, P: 0.100% or less, S: 0.100% or less, Al: 0 to 1.000%, N: 0.0100% or less, Nb: 0 to 0.100%, Mo, Ni, Cu, Co, W, Sn, V, Sb: each 0 to 0.500%, Mg, Ca, Zr, REM, O: each 0 to 0.0100% or less, and the balance Fe and impurities. Further, the chemical composition of the base material steel sheet of the first Al-based plated steel sheet 1 and the chemical composition of the base material steel sheet of the second Al-based plated steel sheet 2 may be the same or different within the range of the above-described chemical composition.

The method of manufacturing the Al-based plated steel sheet using the above-described chemical composition for the base material steel sheet is not limited in particular. For example, the one manufactured through a conventional pig iron-making process and steel-making process and by processes of hot rolling, pickling, cold rolling, and Sendzimir hot-dip aluminum plating can be used as the above-described aluminum plated steel sheet.

In this embodiment, a sheet thickness t1 (mm) of the first Al-based plated steel sheet 1 and a sheet thickness t2 (mm) of the second Al-based plated steel sheet 2 are each preferably 0.5 mm or more and 3.2 mm or less selectively. Setting the sheet thickness to 0.5 mm or more makes it possible to maintain the productivity in the processes of hot rolling and cold rolling at a desired state. Further, setting the sheet thickness to 3.2 mm or less makes it possible to prevent a phenomenon in which the cooling rate decreases during metal mold quenching of hot stamping and hardenability becomes insufficient, to thus fail to obtain a desired tensile strength.

Incidentally, the sheet thickness t1 of the first Al-based plated steel sheet 1 and the sheet thickness t2 of the second Al-based plated steel sheet 2 can be measured using, for example, a micrometer based on JIS B7502: 2016. Further, the above-described sheet thicknesses t1 and t2 are each set to a sheet thickness including the thicknesses of the Al-based plated layers provided on both faces of the base material steel sheet, in addition to the sheet thickness of the base material steel sheet.

<Al-based plated layer>

The coating weight of the Al-based plated layer applied to both faces of the first Al-based plated steel sheet 1 is W1a (g/m$^2$) on the surface 1a of the side in contact with the second Al-based plated steel sheet 2, and is W1b (g/m$^2$) on the surface 1b of the side not in contact with the second Al-based plated steel sheet 2. Further, the coating weight of the Al-based plated layer applied to both faces of the second Al-based plated steel sheet 2 is W2a (g/m$^2$) on the surface 2b of the side not in contact with the first Al-based plated steel sheet 1. Here, the values of W1a, W1b, and W2b described above are each independently within a range of 20 g/m$^2$ or more and 120 g/m$^2$ or less per face. That is, W1a, W1b, and W2b satisfy Expression (3), Expression (4), and Expression (5) below, respectively.

$$20 \leq W1a \leq 120 ... \text{Expression (3)}$$

$$20 \leq W1b \leq 120 ... \text{Expression (4)}$$

$$20 \leq W2b \leq 120 ... \text{Expression (5)}$$

Here, the average coating weight of the Al-based plated layer at the non-overlapped part (one-sheet part 4b) in the overlapped blank for hot stamping 4 is set to W1 (g/m$^2$) per face. In the first Al-based plated steel sheet 1, when the coating weight of the Al-based plated layer on one face of the surface on the side in contact with the second Al-based plated steel sheet 2 is W1a (g/m$^2$) and the coating weight of the Al-based plated layer on one face of the surface on the side not in contact with the second Al-based plated steel sheet 2 is W1b (g/m$^2$), W1 = 0.5 × (W1a + W1b) is established. Further, the average coating weight of the Al-based plated layer at the overlapped part 4a in the overlapped blank for hot stamping 4 is set to W2 (g/m$^2$) per face. When the coating weight of the Al-based plated layer on one face of the surface 1b on the side not in contact with the second Al-based plated steel sheet 2 in the first Al-based plated steel sheet 1 is W1b (g/m$^2$) and the coating weight of the Al-based plated layer on one face of the surface on the side not in contact with the first Al-based plated steel sheet 1 in the second Al-based plated steel sheet 2 is W2b (g/m$^2$), W2 = 0.5 × (W1b + W2b) is established.

Incidentally, in the first Al-based plated steel sheet 1, the surface 1a on the side in contact with the second Al-based plated steel sheet 2 and the surface 1b on the side not in contact with the second Al-based plated steel sheet 2, and in the second Al-based plated steel sheet 2, the surface 2b on the side not in contact with the first Al-based plated steel sheet 1 are faces exposed to a heat source when the manufactured overlapped blank is subjected to hot stamping heating, and become surfaces important for controlling the temperature increasing rate during the heating in the hot stamping.

Examples of the characteristics required for the Al-based plated layer according to this embodiment include (a) suppression of generation of Fe scales during hot stamping heating and (b) suppression of chip or pressing flaw of plating caused by slipping (also called powdering) of plating during hot stamping.

The powdering occurs due to a compressive stress applied on the plating on the inner face of the bent part made during forming, a shear stress applied on the plating by the sliding from the metal mold during forming, or another cause. When the coating weight W1 or W2 of the Al-based plated layer on each of the steel sheets is less than 20 g/m$^2$, the thickness of the plating is thin, thus causing a problem of insufficient suppression of the Fe scales. Therefore, the coating weight W1 or W2 of the Al-based plated layer on each of the Al-based plated steel sheets is set to 20 g/m$^2$ or more independently. The coating weight W1 or W2 of the Al-based plated layer on each of the Al-based plated steel sheets is preferably 30 g/m$^2$ or more independently, and more preferably, in order of increasing preference, 35 g/m$^2$ or more, 40 g/m$^2$ or more, 45 g/m$^2$ or more, or 50 g/m$^2$ or more.

On the other hand, when the coating weight W1 or W2 of the plating per face on each of the Al-based plated steel sheets is greater than 120 g/m$^2$, a problem of insufficient suppression of the powdering occurs. Therefore, in this embodiment, the coating weight W1 or W2 of the plating per face on each of the Al-based plated steel sheets is set to 120 g/m$^2$ or less independently. The coating weight W1 or W2 of the plating per face on each of the Al-based plated steel sheets is preferably 110 g/m$^2$ or less independently, and more preferably, in order of increasing preference, 100 g/m$^2$ or less, 95 g/m$^2$ or less, or 90 g/m$^2$ or less. Incidentally, in the second Al-based plated steel sheet 2, the coating weight of the Al-based plated layer on the surface of the side in contact with the first Al-based plated steel sheet 1 is not particularly defined.

Incidentally, the thickness ($\mu$m) of the Al-based plated layer on each of the Al-based plated steel sheets can be approximated from the plating coating weight (g/m$^2$). The thickness ($\mu$m) of the Al-based plated layer on each of the Al-based plated steel sheets can be roughly found by Equation (10) below though depending on the chemical composition of the Al-based plated layer.

$$\text{(Plating thickness)} = \text{(Plating coating weight)}/3...\text{Equation (10)}$$

FIG. 2 schematically illustrates a layer structure of a plated steel sheet 13 on one face side in which the Al-based plated layer according to this embodiment is provided on the surface of the base material steel sheet. When the Al-based plated layer according to this embodiment is manufactured by the hot-dip plating method, an aluminum-iron-based (Al-Fe-based) alloy layer (not illustrated) is formed near the boundary of an Al-based plated layer 14 with a base material steel sheet 15.

Incidentally, according to the general hot-dip plating method as a method of performing the Al-based plating on the base material steel sheet, the base material steel sheet is dipped in a hot-dip aluminum plating bath and subjected to gas wiping in nitrogen or atmosphere, and thereby the Al-based plated steel sheet whose coating weight is adjusted can be manufactured. As a result, the aluminum-iron-based alloy layer is necessarily formed by elution of Fe during hot-dip plating at the interface between the Al-based plated layer 14 and the base material steel sheet 15 in FIG. 2. In this description, it is assumed that the Al-based plated layer 14 in FIG. 2 also includes the aluminum-iron-based alloy layer.

The chemical composition of the hot-dip aluminum plating bath for forming the above-described Al-based plated layer is not particularly limited (that is, the chemical composition is substantially the same as that of the Al-based plated layer 14 except for Fe). However, the content of Al in the hot-dip aluminum plating bath is preferably 80 mass% or more in terms of being excellent in heat resistance required during hot stamping heating. Further, the content of Si in the hot-dip aluminum plating bath is preferably 2 mass% or more in terms of easy control of the thickness of the aluminum-iron-based alloy layer. Setting the content of Si to 2 mass% or more makes it possible to prevent the aluminum-iron-based alloy layer from becoming too thick and reducing formability. On the other hand, setting the content of Si in the hot-dip aluminum plating bath to 15 mass% or less makes it possible to prevent the alloying reaction during hot stamping heating from slowing down and reducing the productivity of hot stamping.

When the hot-dip aluminum plating bath contains 2 mass% or more and 15 mass% or less of Si, a eutectic structure of Al and Si is formed in the Al-based plated layer 14 formed by using such a plating bath based on a constitution diagram. In the case of the hot-dip plating method, 1 mass% or more and 5 mass% or less of Fe is inevitably contained in some cases as an eluted component from the base material steel sheet. Examples of other inevitable impurities include eluted components in a hot-dip plating facility and elements such as Cr, Mn, Zn, V, Ti, Sn, Ni, Cu, W, Bi, Mg, and Ca due to impurities in an ingot of the hot-dip aluminum plating bath, and these elements are contained by less than 1 mass% in some cases.

That is, the Al-based plated layer 14 according to this embodiment may be a plated layer having a chemical composition (average chemical composition) composed of by mass%, Al: 80 to 97%, Si: 2 to 15%, Fe: 1 to 15%, Cr: 0% or more and less than 1%, Mo: 0% or more and less than 1%, Zn: 0% or more and less than 1%, V: 0% or more and less than 1%, Ti: 0% or more and less than 1%, Sn: 0% or more and less than 1%, Ni: 0% or more and less than 1%, Cu: 0% or more and less than 1%, W: 0% or more and less than 1%, Bi: 0% or more and less than 1%, Mg: 0% or more and less than 1%, Ca: 0% or more and less than 1%, and the balance of impurities. Here, as described previously, the hot-dip aluminum plating bath inevitably contains 1 mass% or more and 5 mass% or less of Fe, whereas the aluminum-iron-based alloy layer is formed in the Al-based plated layer, and thus the proportion of Fe increases. Therefore, the chemical composition of the Al-based plated layer 14 may be Fe: 1 to 15%.

Examples of the metal structure of the above-described aluminum-iron-based alloy layer include a $\theta$ phase ($FeAl_3$), a $\eta$ phase ($Fe_2Al_5$), a $\zeta$ phase ($FeAl_2$), $Fe_3Al$, and $FeAl$, which are binary alloys of Al and Fe, an Al solid-solution-based BCC phase ($\alpha2$, $\alpha$), and so on, and the aluminum-iron-based alloy layer is composed of a combination of those plating phases. Examples of the metal structure of the aluminum-iron-based alloy layer in the case of containing Si include a $\tau1$ phase ($Al_2Fe_3Si_3$), a $\tau2$ phase ($Al_3FeSi$), a $\tau3$ phase ($Al_2FeSi$), a $\tau4$ phase ($Al_3FeSi_2$), a $\tau5$ phase ($Al_8Fe_2Si$), a $\tau6$ phase ($Al_9Fe_2Si_2$), a $\tau7$ phase ($Al_3Fe_2Si_3$), a $\tau8$ phase ($Al_2Fe_3Si_4$), a $\tau10$ phase ($Al_4Fe_{1.7}Si$), a $\tau11$ phase ($Al_5Fe_2Si$), and so on, (where each phase does not have a stoichiometric composition in some cases), and the metal structure of the aluminum-iron-based alloy layer is often composed of the $\tau5$ phase or $\theta$ phase mainly.

Further, the coating weight of the above-described Al-based plated layer per face is measured using the method of JIS G 3314: 2019 JB. 3 (a sodium hydroxide-hexamethylenetetramine •hydrochloric acid peeling gravimetric method) after the Al-based plated layer on one face is protected with a seal beforehand.

<Lightness>

The lightness, which is important in the present invention, will be explained below with reference to FIG. 1. This lightness is the CIE 1976 lightness index L* (CIE 1976 lightness) defined in 3.3 of JIS Z 8781-4: 2013, and is simply referred to as "lightness" or "lightness L*" below.

The lightness L* of the surface of the first Al-based plated steel sheet 1 is described as L*1a on the surface 1a on the side in contact with the second Al-based plated steel sheet 2, and is described as L*1b on the surface 1b on the side not in contact with the second Al-based plated steel sheet 2. Further, the lightness L* of the surface of the second Al-based plated steel sheet 2 is described as L*2b on the surface 2b on the side not in contact with the first Al-based plated steel sheet 1. Then, $L*1 = 0.5 \times (L*1a + L*1b)$ and $L*2 = 0.5 \times (L*1b + L*2b)$ are defined. In this case, the overlapped blank for hot stamping 4 satisfies Expression (1) and Expression (2) below. Incidentally, in the second Al-based plated steel sheet 2, the lightness of the surface of the Al-based plated layer on the surface 2a of the side in contact with the first Al-based plated steel sheet 1 is not particularly defined.

$$14.0 \le (L*1 - L*2) \times (W1/W2)^2 \le 32.0 ...\text{Expression (1)}$$

$$0.86 \le \{t1/(t1 + t2)\} \times (L*1/L*2)^2 ...\text{Expression (2)}$$

Here, L*1 means the average lightness of the surface of the Al-based plated layer at the non-overlapped part (one-sheet part 4b) in the overlapped blank for hot stamping 4. Further, L*2 means the average lightness of the surface of the Al-based plated layer at the overlapped part 4a in the overlapped blank for hot stamping 4.

$[(L*1 - L*2) \times (W1/W2)^2$: 14.0 or more and 32.0 or less]

A lower value of the lightness increases the temperature increasing rate in heating during hot stamping of the aluminum plated steel sheet. This is thought to be because a lower value of the lightness suggests that the surface of the aluminum plated steel sheet is blackened, and thus characteristics that easily absorb heat are obtained. That is, in this embodiment, the lightness is used as an index for evaluating the temperature increasing rate in heating during hot stamping. In particular, they found that in order to improve the difference in temperature increasing rate between the overlapped part and the one-sheet part, it is important to make a difference between the lightness of the overlapped part and the lightness of the one-sheet part to increase (L*1 - L*2) (namely, it is important to lower the lightness of the surface at the overlapped part having a thick sheet thickness, and conversely, to increase the lightness of the surface at the one-sheet part).

Further, they found that using the Al-based plated steel sheet makes it possible to obtain high lightness due to the surface having a silver-gray metallic luster, and increasing the thickness of the Al-based plated layer, (which can be thought as the coating weight of the Al-based plated layer), makes it possible to suppress the blackening of the plated surface caused by alloying of the plating reaching the surface, resulting in that high lightness can be maintained even during the hot stamping heating. That is, it is important to increase the ratio (W1/W2) of the coating weight W1 of the Al-based plated layer at the one-sheet part 4b to the coating weight W2 of the Al-based plated layer at the overlapped part 4a. Further, using the carbon-based black coating for the upper layer of the Al-based plated steel sheet makes it possible to reduce the lightness. Thus, by appropriately controlling the Al-based plated layer and the carbon-based black coating used in the Al-based plated steel sheet, the lightness can be adjusted to a desired value.

As above, in order to improve the difference in temperature increasing rate between the overlapped part and the one-sheet part, it is important to control the product of $(L^{*}1 - L^{*}2)$ and $(W1/W2)^2$ to a certain range because the lightness and the coating weight are related to each other.

When the value of $(L^{*}1 - L^{*}2) \times (W1/W2)^2$ is less than 14.0, the temperature increasing rate in the heating during hot stamping is not sufficiently improved, and further, the difference in temperature increasing rate between the overlapped part and the one-sheet part is not sufficiently improved, resulting in that the spot weldability of the overlapped hot stamped component decreases. Therefore, the value of $(L^{*}1 - L^{*}2) \times (W1/W2)^2$ is set to 14.0 or more. The value of $(L^{*}1 - L^{*}2) \times (W1/W2)^2$ is preferably 16.0 or more and more preferably 18.0 or more.

Further, when the value of $(L^{*}1 - L^{*}2) \times (W1/W2)^2$ exceeds 32.0, the improvement in temperature increasing rate in the heating during hot stamping is saturated, and further, the coating weight W1 of the Al-based plated layer on the first Al-based plated steel sheet 1 having a large area increases and the powdering property of the plating during hot stamping decreases. Therefore, the value of $(L^{*}1 - L^{*}2) \times (W1/W2)^2$ is set to 32.0 or less. The value of $(L^{*}1 - L^{*}2) \times (W1/W2)^2$ is preferably 31.0 or less, and more preferably 30.0 or less, 29.0 or less, 28.0 or less, 27.0 or less, or 26.0 or less.

$[\{t1/(t1 + t2)\} \times (L^{*}1/L^{*}2)^2$: 0.86 or more]

A lower value of the lightness increases the temperature increasing rate in heating during hot stamping of the aluminum plated steel sheet. This is thought to be because a lower value of the lightness suggests that the surface of the aluminum plated steel sheet is blackened, and thus characteristics that easily absorb heat are obtained. In particular, in order to improve the slow temperature increasing rate at the overlapped part of the patch work, it is important to relatively reduce the lightness of the overlapped part relative to the sheet thickness of the overlapped part (namely, the total t1 + t2 of the sheet thickness t1 of the first Al-based plated steel sheet 1 and the sheet thickness t2 of the second Al-based plated steel sheet 2). In Expression (2) above, the power number of the sheet thickness ratio t1/(t1 + t2) is 1, whereas the power number of the lightness ratio $(L^{*}1/L^{*}2)$ is 2. This reveals that the lightness ratio $(L^{*}1/L^{*}2)$ is more important than the sheet thickness ratio t1/(t1 + t2) in the present invention.

Further, in order to improve the difference in temperature increasing rate between the overlapped part and the one-sheet part, it is important to reduce the lightness of the surface at the overlapped part having a thick sheet thickness, and conversely, to increase the lightness of the surface at the one-sheet part.

That is, the square of the ratio $(L^{*}1/L^{*}2)$ of the lightness $L^{*}1$ of the one-sheet part to the lightness $L^{*}2$ of the overlapped part becomes 0.86 or more relative to the ratio t1/(t1/t2) of the sheet thickness t1 of the one-sheet part to the sheet thickness (t1 + t2) of the overlapped part that is found from the sheet thickness t1 of the first Al-based plated steel sheet 1 and the sheet thickness t2 of the second Al-based plated steel sheet 2, which is important for improving the difference in temperature increasing rate between the overlapped part and the one-sheet part of the patch work. When the value of $\{t1/(t1 + t2)\} \times (L^{*}1/L^{*}2)^2$ is less than 0.86, a difference in the temperature increasing rate at the overlapped part is made, resulting in that the spot weldability decreases. A higher value of $\{t1/(t1 + t2)\} \times (L^{*}1/L^{*}2)^2$ is better. Therefore, the lower limit of the above value may be set to 0.90 or more, 0.94 or more, 0.98 or more, or 1.02 or more as necessary. However, the upper limit of the value of $\{t1/(t1 + t2)\} \times (L^{*}1/L^{*}2)^2$ is not set in particular, but when the value exceeds 3.00, it becomes economically difficult to make a difference in the lightness. Therefore, the upper limit value of the value of $\{t1/(t1 + t2)\} \times (L^{*}1/L^{*}2)^2$ is 3.00 practically. The value of $\{t1/(t1 + t2)\} \times (L^{*}1/L^{*}2)^2$ is preferably 2.50 or less, more preferably 2.00 or less, and further preferably 1.50 or less.

As a method of measuring the lightness, for example, with a 50 × 50 mm test piece cut out, the lightness can be measured using a spectrophotometric colorimeter (SC-T-GV5 manufactured by Suga Test Instruments Co., Ltd., including specular reflection light) with a measurement beam diameter $\phi$ of 15 mm.

Incidentally, Expression (1) and Expression (2) above were obtained through a series of verifications in which overlapped blanks were fabricated by varying the sheet thickness of the Al-based plated steel sheet, the coating weight of the Al-based plated layer, and other factors, and then were subjected to hot stamping actually, and obtained overlapped hot stamp molded bodies were evaluated. In such verification, each of the obtained overlapped hot stamp molded bodies was evaluated in terms of the temperature increasing rate of the overlapped part or the spot weldability, and the relationships satisfied by those exhibiting good evaluation results were experimentally formulated.

<Carbon-based black coating>

FIG. 3 schematically illustrates a layer structure of an Al-based plated steel sheet 16 on one face side in which the Al-based plated layer 14 is provided on the surface of the base material steel sheet 15 according to the this embodiment, and a carbon-based black coating 17 is further provided at an upper layer of the Al-based plated layer 14, or a layer structure of an Al-based plated steel sheet 16 on one face side in which the Al-based plated layer 14 is provided on the surface of the base material steel sheet 15 according to the this embodiment, and a carbon-based black coating 17 further containing Zn, Ti, Cu, or V selectively is provided at an upper layer of the Al-based plated layer 14.

In the second Al-based plated steel sheet 2, the carbon-based black coating 17 is provided at the upper layer of the Al-based plated layer located on the surface 2b of the side not in contact with the first Al-based plated steel sheet 1. The Al-based plated steel sheet has a silver-gray metallic luster surface, and thus the lightness is high. Here, providing the carbon-based black coating at the upper layer of the Al-based plated steel sheet makes it possible to reduce the lightness. In particular, the carbon-based black coating 17 is burned off by combustion by the oxidation reaction during heating in hot stamping and then is discharged as $CO_2$ or the like. As a result, it is possible to suppress the decrease in spot weldability of the overlapped hot stamped component caused by the remaining carbon-based black coating 17.

Further, examples of the means to further increase the lightness of the Al-based plated steel sheet having a silver-gray metallic luster include heating the Al-based plated steel sheet to about 600°C and oxidizing its surface, thereby whitening the surface. This makes it possible to further increase the lightness of the surface of the Al-based plated steel sheet.

[Film thickness of the carbon-based black coating 17]

The film thickness of the carbon-based black coating 17 is preferably 0.3 $\mu$m or more and 10 $\mu$m or less. The film thickness of the carbon-based black coating 17 is set to 0.3 $\mu$m or more, thereby making it possible to suppress the increase in lightness and increase the temperature increasing rate of the overlapped part. The film thickness of the carbon-based black coating 17 is more preferably 0.3 $\mu$m or more, further preferably 0.4 $\mu$m or more, and still further preferably, in order of increasing preference, 0.5 $\mu$m or more, 0.6 $\mu$m or more, or 0.7 $\mu$m or more. On the other hand, the film thickness of the carbon-based black coating 17 is set to 10 $\mu$m or less, thereby making it possible to reduce the lightness while ensuring economic efficiency, and to ensure spot weldability without leaving the coating after the hot stamping heating. The film thickness of the carbon-based black coating 17 is more preferably 8 $\mu$m or less, and further preferably, in order of increasing preference, 6 $\mu$m or less, 5 $\mu$m or less, or 4 $\mu$m or less.

The film thickness of the carbon-based black coating 17 can be found as an average value of the thicknesses of the coatings measured in three fields of view by performing observation of the cross section of the plating under an optical microscope (for example, area: 100 $\mu$m $\times$ 100 $\mu$m) (without etching) and performing measurement of the thickness of the coating at the upper layer of the aluminum plated layer in the three fields of view, as illustrated in FIG. 3. At this time, the coating is analyzed from the cross section with an electron probe micro analyzer (EPMA) and the coating with a carbon content of 30 mass% or more is determined to be the carbon-based black coating. The coating being a black coating is determined from the fact that the value of the lightness L* from the surface is 60 or less.

[Binder]

The carbon-based black coating 17 can selectively contain resin as a binder to improve the adhesiveness to the Al-based plated layer. The type of resin is not particularly limited, and examples thereof include a polyethylene resin, a polyolefin resin, a polyacrylic resin, a polymethacrylic acid resin, a polyepoxy resin, a polyurethane resin, a polycarbonate resin, and so on.

[Nitrogen content of the carbon-based black coating]

The nitrogen content of the carbon-based black coating 17 is preferably 2 mass% or more and 18 mass% or less. In general, when a carbon-based coating is applied on Al plating, the adhesiveness between the coating and the plating decreases. However, for example, a polyurethane resin containing nitrogen is used as a binder component or ammonia is mixed to increase the content of nitrogen, and thereby the adhesiveness to the Al-based plated layer can be further improved. This makes it possible to further increase the temperature increasing rate of the overlapped part.

Such an effect of improving the adhesiveness to the Al-based plated layer can be achieved by setting the nitrogen content to 2 mass% or more, and therefore, the nitrogen content of the carbon-based black coating 17 is preferably 2 mass% or more. Further, the nitrogen content of the carbon-based black coating 17 is set to 18 mass% or less, thereby making it possible to suppress the decomposition reaction of the resin and prevent the coating from peeling off. Incidentally, the nitrogen content can be found by analyzing the coating from the cross section with an electron probe micro analyzer (EPMA).

[At least one or more of Zn, Ti, Cu, and V are contained in the carbon-based black coating]

It is preferable to selectively contain at least one of Zn, Ti, Cu, and V in the carbon-based black coating 17 further located at the upper layer of the Al-based plated layer applied to the surface of the second steel sheet 2 by 0.2 g/m$^2$ or more and 3.0 g/m$^2$ or less in total. The coating weight described here indicates the coating weight of Zn, Ti, Cu, or V per unit area. Zn, Ti, Cu, and V are elements that form oxides having good infrared absorption in addition to improving emissivity. Therefore, the carbon-based black coating 17 containing such an element is provided, thereby making it possible to suppress the difference in temperature increasing rate between the overlapped part having a slow temperature increasing rate and the one-sheet part having a fast temperature increasing rate, which is a problem caused when used as an overlapped blank. In particular, the carbon-based black coating 17 described above is burned off during the hot stamping heating, whereas Zn, Ti, Cu, or V remains even during the hot stamping heating. Therefore, the carbon-based black coating 17 containing such an element can further contribute to improving the temperature increasing rate at high temperatures. Further, Zn, Ti, Cu, and V may be contained in either a metal state or an oxide state. This is because they become oxides during the temperature increasing process and contribute to improving emissivity.

Such an effect of suppressing the difference in temperature increasing rate as described above can be exhibited by setting the total coating weight of such elements to 0.2 g/m$^2$ or more. Therefore, the total coating weight of such elements in the carbon-based black coating 17 is preferably 0.2 g/m$^2$ or more. The total coating weight of such elements in the carbon-based black coating 17 is more preferably 0.4 g/m$^2$ or more and further preferably 0.6 g/m$^2$ or more.

On the other hand, the total coating weight of such elements in the carbon-based black coating 17 is set to 3.0 g/m$^2$ or less, thereby making it possible to exhibit such an effect of suppressing the difference in temperature increasing rate as described above without saturation. Further, Zn, Ti, Cu, and V remain even after the hot stamping heating and the total coating weight of such elements in the carbon-based black coating 17 is set to 3.0 g/m$^2$ or less, thereby making it possible to maintain the spot weldability of the hot stamped component. The total coating weight of such elements in the carbon-based black coating 17 is more preferably 2.8 g/m$^2$ or less and further preferably 2.6 g/m$^2$ or less.

As a method of specifying the coating weights (contents) of Zn, Ti, Cu, and V, they can be found by performing elemental analyses from the surface using, for example, a fluorescent X-ray analysis apparatus (ZSX Primus manufactured by Rigaku Corporation) and quantifying the coating weights of Zn, Ti, Cu, and V.

The method of treating the above-described carbon-based black coating 17 is not particularly limited, but the carbon-based black coating 17 can be manufactured, for example, by preparing an aqueous coating solution in which aqueous dispersion type carbon black (for example, RCF#52 manufactured by Mitsubishi Chemical Corporation), zinc oxide (for example, Nano Tek manufactured by C.I. Kasei Co., Ltd.) or titanium oxide (for example, Nano Tek manufactured by C.I. Kasei Co., Ltd.), copper oxide (for example, Nano Tek manufactured by C.I. Kasei Co., Ltd.), and vanadium oxide (manufactured by Hongwu International Group Ltd) are dispersed in water, applying it with a roll coater after performing the above-described hot-dip aluminum plating treatment, and performing a dry baking treatment. Alternatively, the carbon-based black coating 17 can be manufactured by using a method of vacuum deposition of metal of Zn, Ti, Cu, or V on the aluminum plated steel sheet.

Incidentally, as another aspect according to this embodiment, on the Al-based plated layer, both of the above-described carbon-based black coating 17 and a coating layer 17' containing at least one of Zn, Ti, Cu, and V (more specifically, these elements in a metal state or oxides of these elements) may be provided. In this case, the arrangement order of the carbon-based black coating 17 and the coating layer 17' containing at least one of Zn, Ti, Cu, and V is not particularly limited, but the carbon-based black coating 17 may be located at the upper layer of the coating layer 17' containing at least one of Zn, Ti, Cu, and V, or the coating layer 17' containing at least one of Zn, Ti, Cu, and V may be located at the upper layer of the carbon-based black coating 17.

Incidentally, even when the coating layer 17' containing at least one of Zn, Ti, Cu, and V is located at a lower layer of the carbon-based black coating 17, fluorescent X-rays easily penetrate the carbon-based black coating 17 as long as the film thickness of the carbon-based black coating 17 according this embodiment is employed. Therefore, even when the coating layer 17' containing at least one of Zn, Ti, Cu, and V is located at a lower layer of the carbon-based black coating 17, it is possible to measure the coating weights of Zn, Ti, Cu, and V by a fluorescent X-ray analysis method.

Further, such a carbon-based black coating 17 or coating layer 17' containing at least one of Zn, Ti, Cu, and V may be provided on both faces of the base material steel sheet, and is more preferably provided only on a face of the side exposed to the heat source during the hot stamping heating in the base material steel sheet.

Further, the first Al-based plated steel sheet 1 may include such a carbon-based black coating as described above as an upper layer of the Al-based plated layer on the side not in contact with the second Al-based plated steel sheet 2.

<Welding>

In the overlapped blank for hot stamping 4 in which the first Al-based plated steel sheet 1 and the second Al-based plated steel sheet 2 are overlapped and welded, as the type of the welding, spot welding, seam welding, braze welding, laser welding, plasma welding, arc welding or the like can be selected. Here, in terms of establishing good contact of the overlapped part, the spot welding that can establish contact even at the inside of the overlapped part at a plurality of points and establish a direct bond by applying pressure between the steel sheets is preferable.

(2. Overlapped hot stamped component)

In the method of manufacturing the hot stamped component according to this embodiment, as illustrated in FIG. 1, the above-described overlapped blank for hot stamping 4 is heated, and when forming it immediately after such heating, the bent part obtained by bending at least a portion of the overlapped part is provided, thereby manufacturing the overlapped hot stamped component 12 in this embodiment.

The temperature of the above-described heating is not particularly limited but is generally set to a temperature range of the Ac3 point (for example, 800°C) or higher and 1000°C or lower. Cooling is performed using a metal mold or a coolant such as water during forming immediately after the heating, and thereby the overlapped hot stamped component 12 excellent in collision resistant property can be obtained. The time period for which the overlapped blank for hot stamping 4 is made to stay at the temperature of the above-described heating is not particularly limited, but may be set to 4 minutes or more and 20 minutes or less, for example.

For example, a preliminary test may be performed to measure the heating time or the temperature increasing rate to a temperature of the Ac3 point or higher and 1000°C or lower for the overlapped blank for hot stamping 4 to be focused on, and the results of the preliminary test obtained may be used to determine the above-described holding time. In this way, for example, conditions such as "maintaining temperatures of 910 to 920°C for 250 to 1200 seconds" can be determined.

Incidentally, the temperature of the above-described heating means the maximum ultimate temperature of the steel sheets of the overlapped part. Further, examples of the heating method include heating by an electric furnace, a gas furnace, a far-infrared furnace, a near-infrared furnace, and so on, energization heating, high-frequency heating, induction heating, and so on.

The overlapped hot stamped component 12 according to this embodiment manufactured as above includes a first Al-Fe-based alloy plated steel sheet having a sheet thickness of T1 (mm) and at least one second Al-Fe-based alloy plated steel sheet that is overlapped and welded on the first Al-Fe-based alloy plated steel sheet, has a smaller area than the first Al-Fe-based alloy plated steel sheet, and has a sheet thickness of T2 (mm).

Incidentally, as described above, the hot stamped component 12 is manufactured by heating the overlapped blank for hot stamping 4 in which the first Al-based plated steel sheet 1 and the second Al-based plated steel sheet 2 are overlapped and welded, and then further subjecting the overlapped blank for hot stamping 4 to bending or the like. Therefore, the first Al-Fe-based alloy plated steel sheet and the second Al-Fe-based alloy plated steel sheet forming the hot stamped component 12 do not necessarily have a flat shape. For example, as illustrated in FIG. 1, the first Al-Fe-based alloy plated steel sheet includes the bent part 8 of the head top part, and the like, and the second Al-Fe-based alloy plated steel sheet includes the bent part 8 of the head top part, the bent part 9 of the flange part, and the like. Although the name "steel sheet" is used, the shape is not necessarily flat. In this embodiment, in order to distinguish between the steel sheet forming the hot stamped component 12 and the steel sheet forming the overlapped blank 4, as a matter of convenience, the former is referred to as an alloy plated steel sheet (for example, an Al-Fe-based alloy plated steel sheet), and the latter is referred to as a plated steel sheet (for example, an Al-based plated steel sheet) ("alloy" is not added).

The first Al-Fe-based alloy plated steel sheet in the overlapped hot stamped component 12 is a plated steel sheet including Al-Fe-based alloy plated layers having an average plating thickness of K1 ($\mu$m) on both faces of the first Al-Fe-based alloy plated steel sheet. Here, K1 is the average value of the plating thickness of the Al-Fe-based alloy plated layer on the side in contact with the second Al-Fe-based alloy plated steel sheet and the plating thickness of the Al-Fe-based alloy plated layer on the side not in contact with the second Al-Fe-based alloy plated steel sheet at the non-overlapped part of the first Al-Fe-based alloy plated steel sheet.

The second Al-Fe-based alloy plated steel sheet in the overlapped hot stamped component 12 is a plated steel sheet including an Al-Fe-based alloy plated layer having a plating thickness of K2 ($\mu$m) on a surface of the side not in contact with the first Al-Fe-based alloy plated steel sheet. Here, K2 is the plating thickness of the Al-Fe-based alloy plated layer on the side not in contact with the first Al-Fe-based alloy-plated steel sheet at the overlapped part of the second Al-Fe-based alloy plated steel sheet.

Incidentally, in the second Al-Fe-based alloy plated steel sheet, the plating thickness of the Al-Fe-based alloy plated layer on the surface of the side in contact with the first Al-Fe-based alloy plated steel sheet is not particularly defined.

Here, the average plating thickness K1 or K2 of the Al-Fe-based alloy plated layer on each of the Al-Fe-based alloy plated steel sheets of the overlapped hot stamped component 12 is 25 $\mu$m or more independently. Further, the average plating thickness K1 or K2 of the Al-Fe-based alloy plated layer on each of the Al-Fe-based alloy plated steel sheets is 60 $\mu$m or less independently. That is, K1 and K2 satisfy Expression (7) and Expression (8) below.

$$25 \le K1 \le 60...\text{Expression (7)}$$

$$25 \le K2 \le 60...\text{Expression (8)}$$

Further, the average plating thickness K1 or K2 of the Al-Fe-based alloy plated layer on each of the Al-Fe-based alloy plated steel sheets is preferably 30 $\mu$m or more and further preferably 35 $\mu$m or more independently.

The average plating thickness K1 or K2 of the Al-Fe-based alloy plated layer on each of the Al-Fe-based alloy plated steel sheets is preferably 58 $\mu$m or less, and further preferably 56 $\mu$m or less, 52 $\mu$m or less, or 48 $\mu$m or less independently.

The plating thicknesses of the Al-Fe-based alloy plated layers of the first Al-Fe-based alloy plated steel sheet and the second Al-Fe-based alloy plated steel sheet each fall within the above-described range, thereby making it possible to maintain the spot weldability of the overlapped hot stamped component 12 in a good state.

The above-described plating thickness can be found as an average value of the plating thicknesses measured in three fields of view by performing observation of the cross section of the plating under an optical microscope (area: 100 $\mu$m $\times$ 100 $\mu$m) after nital etching and performing measurement of the plating thickness in the three fields of view. Incidentally, regarding the plating thickness of the first Al-Fe-based alloy plated steel sheet, there are the position of the one-sheet part 4b and the position of the overlapped part 4a in contact with the second Al-Fe-based alloy plated steel sheet, and the plating thickness of the first Al-Fe-based alloy plated steel sheet is measured at the one-sheet part from the point that the temperature increasing rate is fast, the heating time in the hot stamping is the longest, and the spot weldability is likely to deteriorate.

The Al-Fe-based alloy plated layer is a layer formed when Fe diffuses to the surface of the Al-based plated layer due to the heating during hot stamping (in other words, an alloy plated layer containing at least Al and Fe). The Al-Fe-based alloy plated layer is composed of a combination of phases such as a $\theta$ phase (FeAl$_3$), a $\eta$ phase (Fe$_2$Al$_5$), a $\zeta$ phase (FeAl$_2$), Fe$_3$Al, FeAl, and Al solid-solution Fe each being a compound layer of Al and Fe. Further, the Al-Fe-based alloy plated layer in the case of containing Si in the plating also contains a $\tau$1 phase (Al$_2$Fe$_3$Si$_3$), a $\tau$2 phase (Al$_3$FeSi), a $\tau$3 phase (Al$_2$FeSi), a $\tau$4 phase (Al$_3$FeSi$_2$), a $\tau$5 phase (Al$_8$Fe$_2$Si), a $\tau$6 phase (Al$_9$Fe$_3$Si$_2$), a $\tau$7 phase (Al$_3$Fe$_2$Si$_3$), a $\tau$8 phase (Al$_2$Fe$_3$Si$_4$), a $\tau$10 phase (Al$_4$Fe$_{1.7}$Si), and a $\tau$11 phase (Al$_5$Fe$_2$Si), (where each phase does not have a stoichiometric composition in some cases), and the Al-Fe-based alloy plated layer is often composed of any of the $\tau$1 phase (Al$_2$Fe$_3$Si$_3$), the $\eta$ phase (Fe$_2$Al$_5$), the FeAl phase, and the BCC phase of Al solid-solution Fe, or a plurality of phases thereof mainly.

By the heating during hot stamping, in particular, Al in the Al-based plating and Fe in the base material steel sheet diffuse to each other. Therefore, as a phase formed through the diffusion of Al into the base material steel sheet, a layer containing a BCC phase of Al solid-solution Fe and a FeAl phase in order from the base material steel sheet side is formed. The layer containing these phases is also called a diffusion layer (Diffusion Layer). Here, such a diffusion layer can be identified by observing the cross section after nital etching with an optical microscope, as explained below. Further, when it is impossible to identify the diffusion layer by the observation with an optical microscope, the diffusion layer can be identified by analyzing the cross section with an electron probe micro analyzer (EPMA). In this event, in EPMA analysis results, a layer containing Al: 30 mass% or less and Fe: 70 mass% or more may be set as a diffusion layer 20.

Specifically, as illustrated in FIG. 5 and FIG. 6, in the overlapped hot stamped component 12, a layer 19 is the Al-Fe-based alloy plated layer, and includes the diffusion layer 20. The thickness of the Al-Fe-based alloy plated layer is measured as the thickness of the layer 19, and the thickness of the diffusion layer is measured as the thickness of the layer 20. For example, an example where a cross section was observed with an optical microscope after nital etching is illustrated in FIG. 6.

The thickness of the diffusion layer included in the Al-Fe-based alloy plated layer at the portion of the first Al-Fe-based alloy plated steel sheet that is not overlapped with the second Al-Fe-based alloy plated steel sheet is described as D1 ($\mu$m), and the thickness of the diffusion layer included in the Al-Fe-based alloy plated layer of the second Al-Fe-based alloy plated steel sheet is described as D2 ($\mu$m). At this time, the product (D1 - D2) $\times$ (K1/K2)$^2$ of the difference (D1 - D2) between D1 ($\mu$m) and D2 ($\mu$m) and the ratio (K1/K2)$^2$ of the plating thickness K1 at the non-overlapped part of the first Al-Fe-based alloy plated steel sheet to the plating thickness K2 at the overlapped part of the second Al-Fe-based alloy plated steel sheet is 5.0 $\mu$m or less.

Here, D1 is the average value of the thickness of the diffusion layer located to be in contact with the steel sheet base in the Al-Fe-based alloy plated layer on the side in contact with the second Al-Fe-based alloy plated steel sheet and the thickness of the diffusion layer located to be in contact with the steel sheet base in the Al-Fe-based alloy plated layer on the side not in contact with the second Al-Fe-based alloy plated steel sheet in the first Al-Fe-based alloy plated steel sheet. D2 is the thickness of the diffusion layer located to be in contact with the steel sheet base in the Al-Fe-based alloy plated layer on the side not in contact with the first Al-Fe-based alloy plated steel sheet of the second Al-Fe-based alloy plated steel sheet.

In the Al-Fe-based plated layer, binary alloys ($FeAl_3$, $Fe_2Al_5$, $FeAl_2$) of Al-Fe contain a phase having a relatively low melting point of Al: greater than 30 mass% and Fe: less than 70 mass% and a phase having a relatively high melting point of Al: 30 mass% or less and Fe: 70 mass% or more. When the heating time of hot stamping is long or the heating temperature is high, there is a relationship in which the diffusion layer increases, while the binary alloys ($FeAl_3$, $Fe_2Al_5$, $FeAl_2$) decrease. Regarding the spot weldability, it has been known that the presence of a plated layer having a low melting point promotes sufficient fusion between materials, and thus the binary alloys ($FeAl_3$, $Fe_2Al_5$, $FeAl_2$) decrease in the case of the diffusion layer being thick, resulting in that the spot weldability decreases.

When the value of $(D1 - D2) \times (K1/K2)^2$ is greater than 5.0 $\mu$m, the aforementioned diffusion layer of the first Al-Fe-based alloy plated steel sheet increases, and conversely, the binary alloys of Al-Fe become thinner and the spot weldability decreases. Therefore, it is important for the spot weldability at the overlapped part to suppress $(D1 - D2) \times (K1/K2)^2$ to 5.0 $\mu$m or less. The value of $(D1 - D2) \times (K1/K2)^2$ is preferably 4.5 $\mu$m or less and more preferably 4.0 $\mu$m or less.

On the other hand, the lower limit of $(D1 - D2) \times (K1/K2)^2$ is 0 $\mu$m. However, when the value of $(D1 - D2) \times (K1/K2)^2$ is less than 0.5 $\mu$m, the effect is saturated.

As a method of specifying the plating thickness K1, K2 of the Al-Fe-based alloy plated layer and the thickness D1, D2 of the diffusion layer, the cross section of the plating is subjected to nital etching in a field of view of 100 $\mu$m × 100 $\mu$m, and is observed with an optical microscope. As illustrated in FIG. 6, the plating thickness and the thickness of the diffusion layer are measured with an optical microscope. More specifically, the cross section of the plating is observed through the above-described method at at least three locations, and the plating thickness and the thickness of the diffusion layer at each observation location are specified. After that, average values of the obtained thicknesses are calculated, and the obtained average values may be set to the plating thickness and the thickness of the diffusion layer. However, when the observation with an optical microscope fails to identify the diffusion layer, an analysis is performed using an electron probe micro analyzer (EPMA), and the thickness of the layer containing Al: 30 mass% or less and Fe: 70 mass% or more is measured at at least three locations, and the average value of the measured thicknesses is set to the thickness of the diffusion layer 20.

Incidentally, such a diffusion layer as described above is a layer formed by inward diffusion within the Al-based plated layer, and thus, the thicknesses D1 and D2 of the diffusion layers are strongly affected almost only by the heating conditions of hot stamping and are not affected by the initial plating thickness. Further, even if the plating coating weight on the second Al-based plated steel sheet is increased, it is impossible to make the thickness D2 of the diffusion layer of the second Al-Fe-based alloy plated steel sheet, which has a slower heating rate, substantially the same value as the thickness D1 of the diffusion layer of the first Al-Fe-based alloy plated steel sheet. When the overlapped blank for hot stamping satisfying Expressions (1) to (5) is subjected to a normal hot stamping process, the overlapped hot stamped component satisfying Expressions (7) to (9) is easily obtained.

Further, the plating thicknesses K1 and K2 of the Al-Fe-based alloy plated layers are affected not only by the plating adhesion before hot stamping but also by the heating conditions (heating temperature, holding time) of hot stamping. Further, the plating thicknesses K1 and K2 of the Al-Fe-based alloy plated layers are affected not only by these factors, but also by the sheet thickness, which affects the heating time at high temperatures, and the lightness, and thus are not affected only by the initial plating thickness.

Incidentally, the above-described relational expressions were designed through a series of verifications in which overlapped blanks were fabricated by varying the sheet thickness of the Al-based plated steel sheet, the coating weight of the Al-based plated layer, and other factors, and then were subjected to hot stamping actually, and obtained overlapped hot stamp molded bodies were evaluated. In such verification, each of the obtained overlapped hot stamp molded bodies was evaluated in terms of the temperature increasing rate of the overlapped part or the spot weldability, and the relationships satisfied by those exhibiting good evaluation results were experimentally formulated.

Further, a layer containing at least one of Zn, Ti, Cu, and V may be selectively provided at a further upper layer of the Al-Fe-based alloy plated layer applied to the surface of the second Al-Fe-based alloy plated steel sheet. In this event, the coating weight (content) of at least one of Zn, Ti, Cu, and V is preferably set to greater than 0 g/m$^2$. The coating weight (content) of at least one of Zn, Ti, Cu, and V is more preferably 0.2 g/m$^2$ or more and 3.0 g/m$^2$ or less. The layer containing Zn, Ti, Cu, and V can be obtained by providing a layer containing them in a metal state or an oxide state before hot stamping heating. Most of them become oxides during the temperature increasing process, but the metal state may remain partially.

The coating weight (content) described here refers to a coating weight per unit area as Zn, Ti, Cu, or V.

FIG. 7 schematically illustrates a structure of an Al-Fe-based alloy plated steel sheet in the case where a layer containing at least one of Zn, Ti, Cu, and V is provided at a further upper layer of the Al-Fe-based alloy plated layer applied to the surface of the second Al-Fe-based alloy plated steel sheet in the overlapped hot stamped component. Such an Al-Fe-based alloy plated steel sheet includes the Al-Fe-based alloy plated layer 19 (including the diffusion layer 20) on the surface of the base material steel sheet 21 and a coating layer 23 containing at least one of Zn, Ti, Cu, and V. Such a coating layer 23 is preferably provided on the Al-Fe-based alloy plated layer 19 on the face of the side not in contact with the first Al-Fe-based alloy plated steel sheet in the second Al-Fe-based alloy plated steel sheet.

Zn, Ti, Cu, and V have good infrared absorption in the case of oxides, in addition to improving emissivity. Therefore, providing such a layer makes it possible to suppress the difference in temperature increasing rate between the overlapped part (whose temperature increasing rate is slow) and the one-sheet part (whose temperature increasing rate is fast), which is a problem caused when used as an overlapped blank. As a result, it is possible to suppress excessive heating of the one-sheet part and improve the spot weldability at the one-sheet part of the hot stamped component.

In particular, the oxide of Zn, Ti, Cu, or V remains even during the heating in the hot stamping. Therefore, such a coating layer 23 can further contribute to improving the temperature increasing rate at high temperatures. When the coating layer 23 is provided on the surface of the Al-Fe-based alloy plated layer 19 applied to the surface of the second Al-Fe-based alloy plated steel sheet, the coating weight of the coating layer 23 is set to 0.2 $g/m^2$ or more, thereby making it possible to sufficiently exhibit the effect of suppressing the difference in temperature increasing rate. The coating weight of the coating layer 23 is more preferably 0.4 $g/m^2$ or more and further preferably 0.6 $g/m^2$ or more. On the other hand, the coating weight of the coating layer 23 is set to 3.0 $g/m^2$ or less, thereby making it possible to exhibit such an effect without saturation. Further, although the oxide of Zn, Ti, Cu, or V remains even after the hot stamping heating, the coating weight is set to 3.0 $g/m^2$ or less, thereby making it possible to prevent the spot weldability of the hot stamped component from decreasing. The coating weight of the coating layer 23 is more preferably 2.8 $g/m^2$ or less, and further preferably 2.6 $g/m^2$ or less.

Incidentally, when the coating layer 23 is not provided on the surface of the Al-Fe-based alloy plated layer 19 applied to the surface of the second Al-Fe-based alloy plated steel sheet, the coating weight of Zn, Ti, Cu, or V is 0 $g/m^2$.

Further, in the first Al-Fe-based alloy plated steel sheet, a layer containing at least one of Zn, Ti, Cu, and V may be selectively provided also on the Al-Fe-based alloy plated layer on the face of the side not in contact with the second Al-Fe-based alloy plated steel sheet. In this event, the coating weight (content) of at least one of Zn, Ti, Cu, and V is preferably set to greater than 0 $g/m^2$. The coating weight (content) of at least one of Zn, Ti, Cu, and V is more preferably 0.2 $g/m^2$ or more and 3.0 $g/m^2$ or less. Incidentally, when the layer containing at least one of Zn, Ti, Cu, and V is not provided, the coating weight (content) of Zn, Ti, Cu, or V is 0 $g/m^2$.

The coating weight of the layer containing Zn, Ti, Cu, or V can be found by performing an elemental analysis from the surface using, for example, a fluorescent X-ray analysis apparatus (ZSX Primus manufactured by Rigaku Corporation) and quantifying Zn, Ti, Cu, V.

As above, in the overlapped hot stamped component according to this embodiment, a layer with a total of the Zn content, the Ti content, the Cu content, and the V content of 0.2 to 3.0 $g/m^2$ may be located on the Al-Fe-based alloy plated layer on the face of the side not in contact with the first Al-Fe-based alloy plated steel sheet in the second Al-Fe-based alloy plated steel sheet, and further, a layer with a total of the Zn content, the Ti content, the Cu content, and the V content of 0 to 3.0 $g/m^2$ may be located on the Al-Fe-based alloy plated layer on the face of the side not in contact with the second Al-Fe-based alloy plated steel sheet in the first Al-Fe-based alloy plated steel sheet.

The overlapped hot stamped component 12 in this embodiment, when used as an automotive part, is generally used after being subjected to welding, phosphoric acid-based conversion treatment, electrodeposition coating, and so on. Accordingly, for example, a zinc phosphate coating and a phosphoric acid coating by the phosphoric acid-based conversion treatment, an organic coating of 5 μm or more and 50 μm or less by the electrodeposition coating on the surface of such coatings, and so on are formed on the surface of the hot stamped component 12 in some cases. For improving the external quality and corrosion resistance, coatings such as intermediate coating and finish coating are further performed after the electrodeposition coating in some cases.

[Examples]

Hereinafter, the present invention will be further specifically explained using examples.

(Example 1)

A first Al-based plated steel sheet 1 and a second Al-based plated steel sheet 2 listed in Table 1 were fabricated by the method to be described below, and were subjected to spot welding 3 as illustrated in FIG. 1, and thereby an overlapped blank for hot stamping 4 was fabricated. As the first Al-based plated steel sheet 1, a cold-rolled steel sheet through ordinary hot-rolling process and cold-rolling process and having (a chemical composition: by mass%, C: 0.23%, Si: 0.30%, Mn: 1.2%, P: 0.010%, S: 0.002%, Cr: 0.25%, Ti: 0.020%, Al: 0.042%, N: 0.0030%, B: 0.0020%, and the balance: Fe and impurities) was used as a sample material and an aluminum plating treatment was performed on its both faces on a Sendzimir hot-dip aluminum plating treatment line. After the plating, the plating coating weight was adjusted by the gas wiping method, and then cooling was performed, and the first Al-based plated steel sheet 1 was fabricated. The plating bath composition in this event was 89 mass% Al-9 mass% Si-2 mass% Fe. The second Al-based plated steel sheet 2 was also fabricated in the same manner as the first Al-based plated steel sheet 1, and was coated with a carbon-based black coating.

This blank was subjected to hot stamping heating at 920°C to investigate the temperature increasing rate of an overlapped part, and immediately subjected to mold cooling after being heated for the time during which the overlapped part was held at a temperature between 910 and 920°C for 300 seconds, and thereby an overlapped hot stamped component 12 was obtained. Two flange parts 11 of a non-overlapped part (one-sheet part) were cut out, and spot weldability was investigated with a pair of steel sheets of the same type.

Regarding each level in Table 1, examples of the invention of this application (to be simply described as "invention example" below) are listed as A2 to A7, A10, A11, A13, A20, and A21, and comparative examples are listed as A1, A8, A9, A12, and A15 to A19.

The sheet thicknesses t1 and t2 of the steel sheets were measured using a micrometer based on JIS B7502: 2016, as described above. Further, the plating coating weights W1a, W1b, and W2b per face were measured using the method of JIS G 3314: 2019 JB. 3 after a seal was applied to the back-side face of the face to be measured. Further, regarding the lightnesses L*1a, L*1b, and L*2b, a $50 \times 50$ mm test piece was cut out, and the lightnesses L*1a, L*1b, and L*2b were measured using a spectrophotometric colorimeter (SC-T-GV5 manufactured by Suga Test Instruments Co., Ltd., including specular reflection light) with a measurement beam diameter $\phi = 15$ mm. The film thickness of the carbon-based black coating was measured through cross-sectional observation as described above.

In order to investigate the temperature increasing rate of the overlapped part of the blank, a K-type thermocouple was welded to the center of the overlapped part of the overlapped blank for hot stamping 4 illustrated in FIG. 1. Then, the temperature increasing time was found to evaluate the temperature increasing rate. The temperature increasing time was found from the time when the temperature reached 910°C, and the evaluation was performed. The evaluation criteria are that the temperature increasing time is shortened as follows, based on Comparative example A15 in which the second Al-based plated steel sheet does not include the carbon-based black coating. Evaluation G3 (Good 3) was determined to be good, G2 (Good 2) was determined to be even better, G1 (Good 1) was determined to be particularly good, and Evaluation NG (No Good) was determined to be poor. Incidentally, regarding the description in the column of "TEMPERATURE INCREASING RATE OF OVERLAPPED PART" in Comparative example A15, which serves as a standard for evaluation, "-" was listed to indicate that it is a standard.

<Evaluation criteria>

G1: Shortening of the temperature increasing time by 90 seconds or more
G2: Shortening of the temperature increasing time by 60 seconds or more and less than 90 seconds
G3: Shortening of the temperature increasing time by 30 seconds or more and less than 60 seconds
NG: Shortening of the temperature increasing time by less than 30 seconds or extension of the temperature increasing time

In order to investigate the spot weldability of the overlapped blank for hot stamping after heating, the overlapped blank for hot stamping 4 illustrated in FIG. 1 was subjected to hot stamping heating at 920°C to then investigate the temperature increasing rate of an overlapped part. In this event, the overlapped blank for hot stamping 4 was immediately subjected to mold cooling after being heated for the time during which the overlapped part was held at a temperature between 910 and 920°C for 300 seconds, and thereby an overlapped hot stamped component 12 was obtained. Two flange parts 11 of a non-overlapped part (one-sheet part) were cut out, and spot weldability was investigated with a pair of steel sheets of the same type under the following welding conditions. In the evaluation criteria, regarding the range of a welding current value at which a weld nugget during spot welding can obtain a diameter of $4\sqrt{t}$ (t is a sheet thickness) and a welding current value at which spatters (Splash) are generated (referred to as an appropriate current range), Evaluation G3 (Good 3) was determined to be good, G2 (Good 2) was determined to be even better, G1 (Good 1) was determined to be particularly good, and Evaluation NG (No Good) was determined to be poor.

<Evaluation criteria>

G1: Appropriate current range 2.0 kA or more
G2: Appropriate current range 1.5 kA or more and less than 2.0 kA
G3: Appropriate current range 1.0 kA or more and less than 1.5 kA
NG: Appropriate current range less than 1.0 kA

Welding source: Direct-current inverter, Electrode force: 400 kgf
Electrode shape: DR, Tip diameter $6\varphi$ (R40) (material: chromium copper)
Initial pressurization time: 60 cycles, Welding time 22 cycles, Holding time 10 cycles
Welding current value: 4 kA to 15 kA, Welding at 0.2 kA pitch

A comprehensive evaluation was performed based on the evaluation results regarding the temperature increasing rate of the overlapped part of the above-described blank and the evaluation results regarding the spot weldability after hot stamping (HS). More specifically, based on the score "Gx" (x is an integer from 1 to 3) for each item, the product of numeric characters x was employed as an evaluation value. Those with an obtained evaluation value of "9" or those with an evaluation result of "NG" regarding at least one item were defined as an overall evaluation of "NG." Further, Comparative example A15 was set as a standard for evaluation regarding the temperature increasing rate, and thus, such an overall evaluation as described above was not considered, and "-" was listed in the column of overall evaluation.

In Table 1, the evaluation results obtained by investigating the temperature increasing rate of the overlapped part of the blank and the spot weldability after hot stamping (HS) were summarized.

[Table 1]

TABLE 1

| | LEVEL | FIRST AI-BASED PLATED STEEL SHEET | | | | SECOND AI-BASED PLATED STEEL SHEET | | | | W1 | W2 | L*1 | L*2 | (L*1 - L*2) × (W1/W2)² -...EXPRESSION (1) | t{t1/(t1 + t2)} × (L*1/L*2)² -...EXPRESSION (2) | EVALUATION RESULT | | |
|---|---|---|---|---|---|---|---|---|---|---|---|---|---|---|---|---|---|---|
| | | SHEET THICKNESS t1 (mm) | PLATING COATING WEIGHT (g/m²) | | LIGHTNESS | | SHEET THICKNESS t2 (mm) | PLATING COATING WEIGHT (g/m²) | LIGHTNESS | CARBON-BASED BLACK COATING | | | | | | | SPOT WELDABILITY AFTER HS | TEMPERATURE INCREASING RATE OF OVERLAPPED PART | OVERALL EVALUATION |
| | | | W1a | W1b | L*1a | L'1b | | W2b | L*2b | FILM THICKNESS (μm) | | | | | | | | | |
| COMPARATIVE EXAMPLE | A1 | 1.6 | 80 | 80 | 75 | 75 | 1.6 | 80 | 50 | 0.4 | 80.0 | 80.0 | 75.0 | 62.5 | 12.5 | 0.72 | NG | NG | NG |
| COMARATIVE EXAMPLE | A2 | 1.6 | 80 | 80 | 75 | 75 | 1.6 | 80 | 42 | 0.7 | 80.0 | 80.0 | 75.0 | 58.5 | 16.5 | 0.82 | G3 | G3 | NG |
| INVENTION EXAMPLE | A3 | 1.6 | 80 | 80 | 75 | 75 | 1.6 | 80 | 30 | 1.0 | 80.0 | 80.0 | 75.0 | 52.5 | 22.5 | 1.02 | G2 | G2 | 4 |
| INVENTION EXAMPLE | A4 | 1.6 | 80 | 80 | 75 | 75 | 1.6 | 80 | 25 | 2.0 | 80.0 | 80.0 | 75.0 | 50.0 | 25.0 | 1.13 | G2 | G1 | 2 |
| INVENTION EXAMPLE | A5 | 1.6 | 80 | 80 | 75 | 75 | 1.6 | 80 | 20 | 4.0 | 80.0 | 80.0 | 75.0 | 47.5 | 27.5 | 1.25 | G1 | G1 | 1 |
| INVENTION EXAMPLE | A6 | 1.6 | 80 | 80 | 75 | 75 | 1.6 | 80 | 18 | 9.0 | 80.0 | 80.0 | 75.0 | 46.5 | 28.5 | 1.30 | G1 | G1 | 1 |
| INVENTION EXAMPLE | A7 | 1.6 | 110 | 110 | 75 | 75 | 1.6 | 80 | 30 | 1.0 | 110.0 | 95.0 | 75.0 | 52.5 | 30.2 | 1.02 | G1 | G3 | 3 |
| COMPARATIVE EXAMPLE | A8 | 1.6 | 50 | 50 | 75 | 75 | 1.6 | 80 | 30 | 1.0 | 50.0 | 65.0 | 75.0 | 52.5 | 13.3 | 1.02 | NG | G1 | NG |
| COMPARATIVE EXAMPLE | A9 | 1.6 | 30 | 30 | 75 | 75 | 1.6 | 80 | 30 | 1.0 | 30.0 | 55.0 | 75.0 | 52.5 | 6.7 | 1.02 | NG | G1 | NG |
| INVENTION EXAMPLE | A10 | 1.6 | 85 | 85 | 75 | 75 | 1.6 | 110 | 30 | 1.0 | 85.0 | 97.5 | 75.0 | 52.5 | 17.1 | 1.02 | G2 | G3 | 6 |

EP 4 527 517 A1

| | | SHEET THICKN ESS t1 (mm) | PLATING COATING WEIGHT (g/m$^2$) | | LIGHTNESS | | SHEET THICKN ESS t2 (mm) | PLATING COATING WEIGHT (g/m$^2$) | LIGHT NESS | CARBON- BASED BLACK COATING FILM THICKNESS ($\mu$m) | | | | | | | SPOT WELDA BILITY AFTER HS | TEMPER ATURE INCREA SING RATE OF OVER LAPPED PART | OVERALL EVALU ATION |
|---|---|---|---|---|---|---|---|---|---|---|---|---|---|---|---|---|---|---|---|
| | | | W1a | W1b | L*1a | L'1b | | W2b | L*2b | | | | | | | | | | |
| INVENTION EX-AMPLE | A11 | 1.6 | 50 | 50 | 75 | 75 | 1.6 | 50 | 30 | 1.0 | 50.0 | 50.0 | 75.0 | 52.5 | 22.5 | 1.02 | G2 | G2 | 4 |
| COMPARATIVE EXAMPLE | A12 | 1.6 | 80 | 80 | 75 | 75 | 1.6 | 30 | 30 | 1.0 | 80.0 | 55.0 | 75.0 | 52.5 | 47.6 | 1.02 | NG | G2 | NG |
| INVENTION EXAMPLE | A13 | 1.6 | 25 | 25 | 75 | 75 | 1.6 | 25 | 30 | 1.0 | 25.0 | 25.0 | 75.0 | 52.5 | 22.5 | 1.02 | G2 | G1 | 2 |
| COMPARATIVE EXAMPLE | A15 | 1.6 | 80 | 80 | 75 | 75 | 1.6 | 80 | 75 | 0.0 | 80.0 | 80.0 | 75.0 | 75.0 | 0.0 | 0.50 | NG | - | - |
| COMPARATIVE EXAMPLE | A16 | 1.6 | 5 | 5 | 75 | 75 | 1.6 | 80 | 30 | 1.0 | 5.0 | 42.5 | 75.0 | 52.5 | 0.3 | 1.02 | NG | G2 | NG |
| COMPARATIVE EXAMPLE | A17 | 1.6 | 150 | 150 | 75 | 75 | 1.6 | 80 | 30 | 1.0 | 150.0 | 115.0 | 75.0 | 52.5 | 38.3 | 1.02 | NG | G3 | NG |
| COMPARATIVE EXAMPLE | A18 | 1.6 | 80 | 80 | 75 | 75 | 1.6 | 5 | 30 | 1.0 | 80.0 | 42.5 | 75.0 | 52.5 | 79.7 | 1.02 | NG | G2 | NG |
| COMPARATIVE EXAMPLE | A19 | 1.6 | 80 | 80 | 75 | 75 | 1.6 | **150** | 30 | 1.0 | 80.0 | 115.0 | 75.0 | 52.5 | 10.9 | 1.02 | NG | G3 | NG |
| INVENTION EXAMPLE | A20 | 1.6 | 80 | 80 | 65 | 65 | 1.6 | 80 | 30 | 1.0 | 80.0 | 80.0 | 65.0 | 47.5 | 17.5 | 0.94 | G3 | G2 | 6 |
| INVENTION EXAMPLE | A21 | 1.6 | 80 | 80 | 85 | 85 | 1.6 | 80 | 30 | 1.0 | 80.0 | 80.0 | 85.0 | 57.5 | 27.5 | 1.09 | G3 | G2 | 6 |
| COMPARATIVE EXAMPLE | A22 | 1.6 | 80 | 80 | 75 | 75 | 1.6 | 80 | 40 | 0.8 | 80.0 | 80.0 | 75.0 | 57.5 | 17.5 | 0.85 | G3 | G3 | NG |
| INVENTION EXAMPLE | A23 | 1.6 | 40 | 40 | 75 | 75 | 1.6 | 30 | 28 | 3.0 | 40.0 | 35.0 | 75.0 | 51.5 | 30.7 | 1.06 | G3 | G1 | 3 |

21

A3 to A7, A10, A11, A13, A20, A21, and A23 each being the invention example had the plating coating weight within the range of this application, included the carbon-based black coating, and had the relationships of the sheet thickness, the plating coating weight, and the lightness satisfying Expression (1) and Expression (2), and thus the temperature increasing rate of the overlapped part and the spot weldability after hot stamping were good. A1 being the comparative example included the carbon-based black coating, but did not satisfy Expression (1) or Expression (2), and thus, the temperature increasing rate of the overlapped part and the spot weldability after hot stamping were both poor. A8, A9, and A12 each being the comparative example did not satisfy Expression (1), and thus, the spot weldability after hot stamping was poor. Further, A2 and A22 each being the comparative example included the carbon-based black coating, but did not satisfy Expression (2), and thus had an overall evaluation of NG (No Good). Further, in Comparative examples A16 and A18, in which the plating coating weight is less than 20 g/m$^2$, scales were formed, and in Comparative examples A17 and A19, in which the plating coating weight is greater than 120 g/m$^2$, powdering occurred during pressing, resulting in that it is thought that the spot weldability decreased. Incidentally, A15 being the comparative example did not include the carbon-based black coating and did not satisfy Expression (1) or Expression (2), and thus, the spot weldability after hot stamping was poor.

(Example 2)

First Al-based plated steel sheets and second Al-based plated steel sheets having a sheet thicknesses of 1.0 mm, 1.6 mm, and 2.0 mm were fabricated under the same manufacturing conditions as in Example 1 listed in Table 2, and overlapped blanks for hot stamping were fabricated. A first Al-based plated steel sheet 1 and a second Al-based plated steel sheet 2 were fabricated by the method to be described below, and were subjected to the spot welding 3 as illustrated in FIG. 1, and thereby an overlapped blank for hot stamping 4 was fabricated.

As in Example 1, this blank was subjected to hot stamping heating at 920°C to investigate the temperature increasing rate of an overlapped part, and immediately subjected to mold cooling after being heated for the time during which the overlapped part was held at a temperature between 910 and 920°C for 300 seconds, and thereby an overlapped hot stamped component 12 was obtained. Two flange parts 11 of a non-overlapped part (one-sheet part) were cut out, and spot weldability was investigated with a pair of steel sheets of the same type. Regarding each level in Table 2, the invention example was listed as B1, B5, and B6 and the comparative example was listed as B2, B3, B4, and B7.

In the investigation of the temperature increasing rate of the overlapped part of the blank, the temperature increasing time was found to be evaluated as in Example 1. In B1, the evaluation criteria are that the temperature increasing time is shortened as follows, based on Comparative example B2 in which the first Al-based plated steel sheet and the second Al-based plated steel sheet have the same sheet thickness but the carbon-based black coating is not included in the second Al-based plated steel sheet. Similarly, in B3, the evaluation criteria are that the temperature increasing time is shortened as follows, based on Comparative example B4 in which the first Al-based plated steel sheet and the second Al-based plated steel sheet have the same sheet thickness but the carbon-based black coating is not included in the second Al-based plated steel sheet. Further, in B5 and B6, the evaluation criteria are that the temperature increasing time is shortened as follows, based on Comparative example B7 in which the first Al-based plated steel sheet and the second Al-based plated steel sheet have the same sheet thickness but the carbon-based black coating is not included in the second Al-based plated steel sheet. Evaluation G3 (Good 3) was determined to be good, G2 (Good 2) was determined to be even better, G1 (Good 1) was determined to be particularly good, and Evaluation NG (No Good) was determined to be poor. Incidentally, for each of the comparative examples, which serves as a standard for evaluation, regarding the description in the column of "TEMPERATURE INCREASING RATE OF OVERLAPPED PART," "-" was listed to indicate that it is a standard.

<Evaluation criteria>

G1: Shortening of the temperature increasing time by 90 seconds or more
G2: Shortening of the temperature increasing time by 60 seconds or more and less than 90 seconds
G3: Shortening of the temperature increasing time by 30 seconds or more and less than 60 seconds
NG: Shortening of the temperature increasing time by less than 30 seconds or extension of the temperature increasing time

The spot weldability of the overlapped blank for hot stamping after heating was evaluated using the same investigation method and evaluation criteria as in Example 1.

A comprehensive evaluation was performed based on the evaluation results regarding the temperature increasing rate of the overlapped part of the above-described blank and the evaluation results regarding the spot weldability after hot stamping (HS). More specifically, based on the score "Gx" (x is an integer from 1 to 3) for each item, the product of numeric characters x was employed as an evaluation value. Those with an obtained evaluation value of "9" or those with an evaluation result of "NG" regarding at least one item were defined as an overall evaluation of "NG." Further, for each of the comparative examples, which serves as a standard for evaluation regarding the temperature increasing rate, such an overall evaluation as described above was not considered, and "-" was listed in the column of overall evaluation.

[Table 2]

TABLE 2

| | LEVEL | FIRST AI-BASED PLATED STEEL SHEET | | | | | SECOND AI-BASED PLATED STEEL SHEET | | | | W1 | W2 | L*1 | L*2 | (L*1 - L*2) × (W1/W2)² - ...EXPRESSION (1) | t{t1/(t1 + t2)} × (L*1/L*2)² - ...EXPRESSION (2) | EVALUATION RESULT | | |
| | | SHEET THICKNESS t1 (mm) | PLATING COATING WEIGHT (g/m²) | | LIGHTNESS | | SHEET THICKNESS t2 (mm) | PLATING COATING WEIGHT (g/m²) | LIGHTNESS | CARBON-BASED BLACK COATING | | | | | | | SPOT WELDABILITY AFTER HS | TEMPERATURE INCREASING RATE OF OVERLAPPED PART | OVERALL EVALUATION |
| | | | W1a | W1b | L*1a | L*1b | | W2b | L*2b | FILM THICKNESS (µm) | | | | | | | | | |
| INVENTION EXAMPLE | B1 | 1.6 | 80 | 80 | 75 | 75 | 2.0 | 80 | 30 | 1.0 | 80.0 | 80.0 | 75.0 | 52.5 | 22.5 | 0.91 | G3 | G2 | 6 |
| COMPARATIVE EXAMPLE | B2 | 1.6 | 80 | 80 | 75 | 75 | 2.0 | 80 | 75 | 0.0 | 80.0 | 80.0 | 75.0 | 75.0 | 0.0 | 0.44 | NG | - | - |
| COMPARATIVE EXAMPLE | B3 | 1.0 | 80 | 80 | 75 | 75 | 2.0 | 80 | 30 | 1.0 | 80.0 | 80.0 | 75.0 | 52.5 | 22.5 | 0.68 | G2 | NG | NG |
| COMPARATIVE EXAMPLE | B4 | 1.0 | 80 | 80 | 75 | 75 | 2.0 | 80 | 75 | 0.0 | 80.0 | 80.0 | 75.0 | 75.0 | 0.0 | 0.33 | NG | - | - |
| INVENTION EXAMPLE | B5 | 2.0 | 80 | 80 | 75 | 75 | 1.0 | 80 | 30 | 1.0 | 80.0 | 80.0 | 75.0 | 52.5 | 22.5 | 1.36 | G2 | G2 | 4 |
| INVENTION EXAMPLE | B6 | 2.0 | 80 | 80 | 85 | 85 | 1.0 | 40 | 60 | 0.2 | 80.0 | 60.0 | 85.0 | 72.5 | 22.2 | 0.92 | G2 | G2 | 4 |
| COMPARATIVE EXAMPLE | B7 | 2.0 | 80 | 80 | 75 | 75 | 1.0 | 80 | 75 | 0.0 | 80.0 | 80.0 | 75.0 | 75.0 | 0.0 | 0.67 | NG | - | - |

B1, B5, and B6 each being the invention example had the plating coating weight within the range of this application, included the carbon-based black coating, and had the relationships of the sheet thickness, the plating coating weight, and the lightness satisfying Expression (1) and Expression (2), and thus the temperature increasing rate of the overlapped part and the spot weldability after hot stamping were good. Further, B3 being the comparative example included the carbon-based black coating but did not satisfy Expression (2), and thus, the temperature increasing rate of the overlapped part was poor compared to B4. Incidentally, B2, B4, and B7 each being the comparative example did not include the carbon-based black coating and did not satisfy Expression (1) or Expression (2), and thus the spot weldability after hot stamping was evaluated to be poor.

(Example 3)

First Al-based plated steel sheets and second Al-based plated steel sheets were fabricated under the same manufacturing conditions as Level A3 in Example 1. Those in which Zn, V, Ti, or Cu (vacuum deposition method) was formed on an Al-based plated steel sheet of the second Al-based plated steel sheet, and a carbon-based black coating was further formed thereon were fabricated as Invention examples C1 to C4. Further, Invention examples C5 to C10 were fabricated by containing water-dispersed sol of a Zn oxide, a V oxide, a Ti oxide, or a Cu oxide in the carbon-based black coating. These were subjected to the spot welding 3 as illustrated in FIG. 1, and thereby overlapped blanks for hot stamping 4 were fabricated. Details of Invention examples C1 to C10 are as listed in Table 3.

As in Example 1, this blank was subjected to hot stamping heating at 920°C to investigate the temperature increasing rate of an overlapped part (the evaluation criteria were the same as in Example 1, and based on Comparative example A15 in which the carbon-based black coating is not included in the second Al-based plated steel sheet, evaluation was performed), and immediately subjected to mold cooling after being heated for the time during which the overlapped part was held at a temperature between 910 and 920°C for 300 seconds, and thereby an overlapped hot stamped component 12 was obtained. Two flange parts 11 of a non-overlapped part (one-sheet part) were cut out, and spot weldability was investigated with a pair of steel sheets of the same type (the evaluation criteria were the same as in Example 1). The results obtained are listed in Table 3.

[Table 3]

TABLE 3

| | LEVEL | CARBON-BASED BLACK COATING | | | EVALUATION RESULT | | |
|---|---|---|---|---|---|---|---|
| | | CONTAINED METALLIC SUBSTANCE | | FILM THICKNESS ($\mu$m) | SPOT WELDA BILITY AFTER HS | TEMPER ATURE INCREA SING RATE OF OVER LAPPED PART | OVERALL EVALU ATION |
| | | CONTAINED SUBSTANCE | METALLIC SUBSTANCE COATING WEIGHT (g/m$^2$) | | | | |
| INVENTION EXAMPLE (REPEAT) | A3 | NONE | NONE | 1.0 | G2 | G2 | 4 |
| INVENTION EXAMPLE | C1 | Zn | 0.3 | 1.0 | G1 | G1 | 1 |
| INVENTION EXAMPLE | C2 | V | 0.3 | 1.0 | G1 | G1 | 1 |
| INVENTION EXAMPLE | C3 | Ti | 0.3 | 1.0 | G1 | G1 | 1 |
| INVENTION EXAMPLE | C4 | Cu | 0.3 | 1.0 | G1 | G1 | 1 |
| INVENTION EXAMPLE | C5 | Zn OXIDE | 0.3 | 1.0 | G1 | G1 | 1 |

(continued)

| | LEVEL | CARBON-BASED BLACK COATING | | | EVALUATION RESULT | | |
| | | CONTAINED METALLIC SUBSTANCE | | FILM THICKNESS ($\mu$m) | SPOT WELDA BILITY AFTER HS | TEMPER ATURE INCREA SING RATE OF OVER LAPPED PART | OVERALL EVALU ATION |
| | | CONTAINED SUBSTANCE | METALLIC SUBSTANCE COATING WEIGHT (g/m$^2$) | | | | |
|---|---|---|---|---|---|---|---|
| INVENTION EXAMPLE | C6 | V OXIDE | 0.3 | 1.0 | G1 | G1 | 1 |
| INVENTION EXAMPLE | C7 | Ti OXIDE | 0.3 | 1.0 | G1 | G1 | 1 |
| INVENTION EXAMPLE | C8 | Cu OXIDE | 0.3 | 1.0 | G1 | G1 | 1 |
| INVENTION EXAMPLE | C9 | Ti OXIDE | 1.0 | 3.0 | G1 | G1 | 1 |
| INVENTION EXAMPLE | C10 | Cu OXIDE | 2.5 | 3.0 | G1 | G1 | 1 |

C1 to C10 each being the invention example included a preferable coating containing Zn, V, Ti, or Cu in the carbon-based black coating, and thus exhibited better results than A3 in terms of the temperature increasing rate of the overlapped part and the spot weldability after HS.

(Example 4)

Under the same manufacturing conditions as Level A3 in Example 1, first Al-based plated steel sheets and second Al-based plated steel sheets were fabricated, and a carbon-based black coating was formed on an Al-based plated steel sheet of each of the second Al-based plated steel sheets, and one in which the nitrogen content was set to 1% by the above-described method was set to D1, those in which the nitrogen contents were set to 2%, 5%, 8%, 18%, and 20% were set to D2, D3, D4, D5, and D6 respectively, and a tape peel test was performed (tape: CT405AP-24 manufactured by Nichiban Co., Ltd.). As a result, in D1 with the nitrogen content of 1% and D6 with the nitrogen content of 20%, peeling of the coating was observed, and in the others of D2, D3, D4, and D5, peeling was not observed.

(Example 5)

Under the same manufacturing conditions as Levels A3, A7, A10, A12, A13, A15, and A16 in Example 1 and Levels C5, C6, C9, and C10 in Example 3 listed in Table 4, overlapped hot stamp molded bodies were fabricated and levels of the fabricated overlapped hot stamp molded bodies were set to E1, E6, E7, E8, E9, E10, E11, E2, E3, E4, and E5. Further, Al-based plated steel sheets each including a carbon-based black coating containing a Zn oxide, a V oxide, a Ti oxide, or a Cu oxide, which were used in the second Al-based plated steel sheets in E2, E3, E4, and E5, were used for both the second Al-based plated steel sheet and the first Al-based plated steel sheet, and overlapped hot stamp molded bodies were fabricated under the same manufacturing conditions as in Example 3. Levels of the fabricated overlapped hot stamp molded bodies were set to E12, E13, E14, and E15 respectively. Incidentally, such manufacturing conditions in Example 1 and Example 3 as described above, which were applied to obtain the overlapped hot stamp molded bodies in Levels E1 to E15, are listed in Table 4 with an item of "APPLIED MANUFACTURING CONDITION" provided. Two non-overlapped parts (one-sheet parts) were cut out to investigate spot weldability with a pair of steel sheets of the same type. Regarding each of the levels in Table 4, Invention examples were listed as E1 to E5, E7, E9, and E12 to E15, and Comparative examples were listed as E6, E8, E10, and E11. The evaluation method and the evaluation criteria for spot weldability after hot stamping are the same as those in Example 1.

The plating thickness K1 of the Al-Fe-based alloy plated layer of the first Al-Fe-based alloy plated steel sheet, the thickness D1 of the diffusion layer, the plating thickness K2 of the Al-Fe-based alloy plated layer of the second Al-Fe-based alloy plated steel sheet, and the thickness D2 of the diffusion layer were measured by observing a cross section using an optical microscope as described above (each was measured at three locations and the average value of the measured values was found).

[Table 4]

TABLE 4

| | LEVEL | APPLIED MANUFACTURING CONDITION | FIRST Al-Fe-BASED ALLOY PLATED STEEL SHEET | | | SECOND Al-Fe-BASED ALLOY PLATED STEEL SHEET | | | (D1-D2)×(K1/K2)²... EXPRESSION (9) | EVALUATION RESULT |
| | | | PLATING | | OXIDE COATING WEIGHT | PLATING | | OXIDE COATING WEIGHT | | SPOT WELDABILITY AFTER HS |
| | | | PLATING THICKNESS K1 (μm) | DIFFUSION LAYER THICKNESS D1 (μm) | (g/m²) | PLATING THICKNESS K2 (μm) | DIFFUSION LAYER THICKNESS D2 (μm) | (g/m²) | | |
|---|---|---|---|---|---|---|---|---|---|---|
| INVENTION EXAMPLE | E1 | A3 | 45 | 18 | 0.0 | 42 | 15 | 0.0 | 3.4 | G2 |
| INVENTION EXAMPLE | E2 | C5 | 44 | 17 | 0.0 | 42 | 15 | Zn OXIDE: 0.3 | 2.2 | G1 |
| INVENTION EXAMPLE | E3 | C6 | 43 | 16 | 0.0 | 42 | 15 | V OXIDE: 0.3 | 1.0 | G1 |
| INVENTION EXAMPLE | E4 | C9 | 44 | 17 | 0.0 | 42 | 15 | Ti OXIDE: 1.0 | 2.2 | G1 |
| INVENTION EXAMPLE | E5 | C10 | 43 | 16 | 0.0 | 42 | 15 | Cu OXIDE: 2.5 | 1.0 | G1 |
| COMPARATIVE EXAMPLE | E6 | A7 | 58 | 18 | 0.0 | 42 | 15 | 0.0 | 5.7 | NG |
| INVENTION EXAMPLE | E7 | A10 | 46 | 18 | 0.0 | 55 | 15 | 0.0 | 2.1 | G2 |
| COMPARATIVE EXAMPLE | E8 | A12 | 49 | 22 | 0.0 | 25 | 15 | 0.0 | 26.9 | NG |
| INVENTION EXAMPLE | E9 | A13 | 28 | 18 | 0.0 | 25 | 15 | 0.0 | 3.8 | G2 |
| COMPARATIVE EXAMPLE | E10 | A15 | 49 | 22 | 0.0 | 42 | 15 | 0.0 | 9.5 | NG |
| COMPARATIVE EXAMPLE | E11 | A16 | 23 | 21 | 0.0 | 17 | 15 | 0.0 | 11.0 | NG |

(continued)

| | LEVEL | APPLIED MANUFAC TURING CONDITION | FIRST Al-Fe-BASED ALLOY PLATED STEEL SHEET | | | SECOND Al-Fe-BASED ALLOY PLATED STEEL SHEET | | | $(D1 - D2) \times (K1/-K2)^2 ...$ EXPRE SSION (9) | EVALUATION RESULT |
| | | | PLATING | | OXIDE COATING WEIGHT | PLATING | | OXIDE COATING WEIGHT | | SPOT WELDA BILITY AFTER HS |
| | | | PLATING THICK NESS K1 ($\mu$m) | DIFFUSION LAYER THICK NESS D1 ($\mu$m) | (g/m$^2$) | PLATING THICK NESS K2 ($\mu$m) | DIFFUSION LAYER THICK NESS D2 ($\mu$m) | (g/m$^2$) | | |
| INVENTION EX-AMPLE | E12 | C5 | 44 | 17 | Zn OXIDE: 0.3 | 41 | 14 | Zn OXIDE: 0.3 | 3.5 | G1 |
| INVENTION EXAMPLE | E13 | C6 | 44 | 16 | V OXIDE: 0.3 | 41 | 14 | V OXIDE: 0.3 | 2.3 | G1 |
| INVENTION EXAMPLE | E14 | C9 | 44 | 17 | Ti OXIDE: 1.0 | 42 | 15 | Ti OXIDE: 1.0 | 2.2 | G1 |
| INVENTION EXAMPLE | E15 | C10 | 43 | 17 | Cu OXIDE: 2.5 | 42 | 15 | Cu OXIDE: 2.5 | 2.1 | G1 |

E1 to E5, E7, E9, and E12 to E15 each being the invention example had the plating thicknesses K1 and K2 of the Al-Fe-based alloy plated layers falling within the range of the invention of this application and had the plating thickness of the Al-Fe-based alloy plated layer and the thickness of the diffusion layer satisfying Expression (9), and thus, the spot weldability after hot stamping was good. E6, E8, and E10 each being the comparative example did not satisfy Expression (9), and thus the spot weldability after hot stamping was poor. E11 being the comparative example had less than 25 $\mu$m of the plating thickness of the Al-Fe-based alloy plated layer and did not satisfy Expression (9), and thus spot weldability after hot stamping was poor.

Further, E2, E3, E4, and E5 each being the invention example had a Zn, V, Ti, or Cu oxide on the Al-Fe-based alloy plated layer of the second Al-Fe-based alloy plated steel sheet, and thus exhibited a better result than E1 in terms of the spot weldability after HS.

Further, E12, E13, E14, and E15 each being the invention example had a Zn, V, Ti, or Cu oxide on each of the Al-Fe-based alloy plated layer of the first Al-Fe-based alloy plated steel sheet and the Al-Fe-based alloy plated layer of the second Al-Fe-based alloy plated steel sheet, and thus exhibited a better result than E1 in terms of the spot weldability after HS.

(Example 6)

Focusing again on Levels A2, A3, A5, and A15 in Example 1 listed in Table 1, first Al-based plated steel sheets and second Al-based plated steel sheets were further manufactured under the same manufacturing conditions except that a carbon-based black coating was further provided on the first Al-based plated layer with respect to these levels, and were subjected to the spot welding 3 as illustrated in FIG. 1, and thereby overlapped blanks for hot stamping 4 were fabricated.

As in Example 1, this blank was subjected to hot stamping heating at 920°C to investigate the temperature increasing rate of an overlapped part (the evaluation criteria were the same as in Example 1, and based on Comparative example A15 in which the carbon-based black coating is not included in the second Al-based plated steel sheet, evaluation was performed), and immediately subjected to mold cooling after being heated for the time during which the overlapped part was held at a temperature between 910 and 920°C for 300 seconds, and thereby an overlapped hot stamped component 12 was obtained. Two flange parts 11 of a non-overlapped part (one-sheet part) were cut out, and spot weldability was investigated with a pair of steel sheets of the same type (the evaluation criteria were the same as in Example 1).

Levels in Table 5 were listed as F1 to F4. Level F1 is that the carbon-based black coating was further provided in the first Al-based plated steel sheet in Level A2, Level F2 is that the carbon-based black coating was further provided in the first Al-based plated steel sheet in Level A3, and Level F3 is that the carbon-based black coating was further provided in the first Al-based plated steel sheet in Level A5. Further, Level F4 is that the carbon-based black coating was further provided in the first Al-based plated steel sheet in Level A15.

[Table 5]

It is clear from Table 5 above that F1 to F4 have a further increase in the temperature increasing rate at the overlapped part and obtain more excellent evaluation results compared to A2, A3, A5, and A15 corresponding thereto respectively.

Preferred embodiments of the present invention have been explained above with reference to the accompanying drawings, but the present invention is not limited to the embodiments. It should be understood that various changes and

TABLE 5

| | LEVEL | FIRST Al-BASED PLATED STEEL SHEET | | | | | | SECOND Al-BASED PLATED STEEL SHEET | | | | W1 | W2 | L*1 | L*2 | (L*1 - L*2) × (W1/W2)² ...EXPRESSION (1) | t{t1/(t1 + t2)} × (L*1/L*2)² ...EXPRESSION (2) | EVALUATION RESULT | | |
| | | SHEET THICKNESS t1 (mm) | PLATING COATING WEIGHT (g/m²) | | LIGHTNESS | | CARBON-BASED BLACK COATING | SHEET THICKNESS t2 (mm) | PLATING COATING WEIGHT (g/m²) | LIGHTNESS | CARBON-BASED BLACK COATING | | | | | | | SPOT WELDABILITY AFTER HS | TEMPERATURE INCREASING RATE OF OVERLAPPED PART | OVERALL EVALUATION |
| | | | W1a | W1b | L*1a | L*1b | FILM THICKNESS (µm) | | W2b | L*2b | FILM THICKNESS (µm) | | | | | | | | | |
| COMPARATIVE EXAMPLE (REPEAT) | A2 | 1.6 | 80 | 80 | 75 | 75 | 0.0 | 1.6 | 80 | 42 | 0.7 | 80.0 | 80.0 | 75.0 | 58.5 | 16.5 | 0.82 | G3 | G3 | NG |
| INVENTION EXAMPLE (REPEAT) | A3 | 1.6 | 80 | 80 | 75 | 75 | 0.0 | 1.6 | 80 | 30 | 1.0 | 80.0 | 80.0 | 75.0 | 52.5 | 22.5 | 1.02 | G2 | G2 | 4 |
| INVENTION EXAMPLE (REPEAT) | A5 | 1.6 | 80 | 80 | 75 | 75 | 0.0 | 1.6 | 80 | 20 | 4.0 | 80.0 | 80.0 | 75.0 | 47.5 | 27.5 | 1.25 | G1 | G1 | 1 |
| COMPARATIVE EXAMPLE (REPEAT) | A15 | 1.6 | 80 | 80 | 75 | 75 | 0.0 | 1.6 | 80 | 75 | 0.0 | 80.0 | 80.0 | 75.0 | 75.0 | 0.0 | 0.50 | NG | NG | NG |
| INVENTION EXAMPLE | F1 | 1.6 | 80 | 80 | 75 | 42 | 0.7 | 1.6 | 80 | 42 | 0.7 | 80.0 | 80.0 | 58.5 | 42.0 | 16.5 | 0.97 | G3 | G2 | 6 |
| INVENTION EXAMPLE | F2 | 1.6 | 80 | 80 | 75 | 30 | 1.0 | 1.6 | 80 | 30 | 1.0 | 80.0 | 80.0 | 52.5 | 30.0 | 22.5 | 1.53 | G2 | G1 | 2 |
| INVENTION EXAMPLE | F3 | 1.6 | 80 | 80 | 75 | 20 | 4.0 | 1.6 | 80 | 20 | 4.0 | 80.0 | 80.0 | 47.5 | 20.0 | 27.5 | 2.82 | G1 | G1 | 1 |
| COMPARATIVE EXAMPLE | F4 | 1.6 | 80 | 80 | 75 | 20 | 4.0 | 1.6 | 80 | 75 | 0.0 | 80.0 | 80.0 | 47.5 | 47.5 | 0.0 | 0.50 | NG | G1 | NG |

modifications are readily apparent to those skilled in the art within the scope of the technical spirit as set forth in claims, and those should also be covered by the technical scope of the present invention.

Incidentally, this application claims priority based on the invention filed on May 19, 2022, having the following gist.

[a] An overlapped blank for hot stamping includes:

a first steel sheet having a sheet thickness t1 (mm), which is a blank; and

at least one second steel sheet having a sheet thickness t2 (mm) with a smaller area than the first steel sheet, the second steel sheet overlapped and welded on the first steel sheet, in which

the first steel sheet and the second steel sheet each are a plated steel sheet including Al-based plated layers on both faces of the steel sheet,

the second steel sheet includes a carbon-based black coating as an upper layer of at least a part of the Al-based plated layer on the side not in contact with the first steel sheet,

when in the first steel sheet, a coating weight of the Al-based plated layer is W1a ($g/m^2$) on the surface of the side in contact with the second steel sheet and is W1b ($g/m^2$) on the surface of the side not in contact with the second steel sheet, and lightness L* of the surface of the first steel sheet defined in JIS Z 8781-4 is L*1a on the surface of the side in contact with the second steel sheet and is lightness L*1b on the surface of the side not in contact with the second steel sheet,

in the second steel sheet, a coating weight of the Al-based plated layer is W2b ($g/m^2$) on the surface of the side not in contact with the first steel sheet, and lightness L* of the surface of the second steel sheet is L*2b on the surface of the side not in contact with the first steel sheet, and

at an overlapped part of the first steel sheet and the second steel sheet, an average coating weight W2 of the Al-based plated layer is set to $0.5 \times (W1b + W2b)$ and average lightness L*2 is set to $5 \times (L*1b + L*2b)$, and at a part of the first steel sheet that is not overlapped with the second steel sheet, an average coating weight W1 of the Al-based plated layer is set to $0.5 \times (W1a + W1b)$ and average lightness L*1 is set to $0.5 \times (L*1a + L*1b)$,

the W1a, the W1b, and the W2b are each within a range of 20 $g/m^2$ or more and 120 $g/m^2$ or less, and

the L*1, the L*2, the W1, the W2, the t1, and the t2 satisfy relationships of Expression (a) and Expression (b) below.

$$14 \leq (L*1 - L*2) \times (W1/W2)^2 \leq 32...\text{Expression (a)}$$

$$0.80 \leq \{t1/(t1 + t2)\} \times (L*1/L*2)^2...\text{Expression (b)}$$

[b] The overlapped blank for hot stamping according to [a], in which
a film thickness of the carbon-based black coating is 0.3 $\mu$m or more and 10.0 $\mu$m or less.
[c] The overlapped blank for hot stamping according to [a] or [b] in which
the carbon-based black coating contains at least one of Zn, Ti, Cu, and V by 0.2 $g/m^2$ or more and 3.0 $g/m^2$ or less in total.
[d] The overlapped blank for hot stamping according to [a] or [b] in which
a nitrogen content of the carbon-based black coating is 1 mass% or more and 20 mass% or less.
[e] The overlapped blank for hot stamping according to [c] in which
a nitrogen content of the carbon-based black coating is 1 mass% or more and 20 mass% or less.
[f] An overlapped hot stamped component includes: a first steel sheet having a sheet thickness T1 (mm); and at least one second steel sheet having a sheet thickness T2 (mm) with a smaller area than the first steel sheet, the second steel sheet overlapped and welded on the first steel sheet, in which

the first steel sheet and the second steel sheet each are a plated steel sheet including Al-Fe-based alloy plated layers on both faces of the steel sheet,

in the first steel sheet, a plating thickness K1 of the Al-Fe-based alloy plated layer at a non-overlapped part is 25 $\mu$m or more and 60 $\mu$m or less, and

in the second steel sheet, a plating thickness K2 of the Al-Fe-based alloy plated layer at an overlapped part is 25 $\mu$m or more and 60 $\mu$m or less, and

when in the first steel sheet, a thickness of a diffusion layer containing Al: 30 mass% or less and Fe: 70 mass% or more, which is located to be in contact with a steel sheet base in the Al-Fe-based alloy plated layer, is set to D1 ($\mu$m), and in the second steel sheet, a thickness of a diffusion layer containing Al: 30 mass% or less and Fe: 70 mass% or more, which is located to be in contact with a steel sheet base in the Al-Fe-based alloy plated layer, is set to D2 ($\mu$m),

the K1, the K2, the D1, and the D2 satisfy a relationship of Expression (c) below, and
the first steel sheet and the second steel sheet have a bent part.

$$0.0 \leq (D1 - D2) \times (k1/K2)^2 \leq 5.0 ... \text{Expression (c)}$$

[g] The overlapped hot stamped component according to [f], in which
in the second steel sheet, 0.2 g/m$^2$ or more and 3.0 g/m$^2$ or less in total of at least one of Zn, Ti, Cu, and V oxides is
present on at least a part of the Al-Fe-based alloy plated layer on the face of the side not in contact with the first steel
sheet.

[Explanation of Codes]

1 first Al-based plated steel sheet
1a face in contact with second Al-based plated steel sheet of first Al-based plated steel sheet
1b face not in contact with second Al-based plated steel sheet of first Al-based plated steel sheet
2 second Al-based plated steel sheet
2a face in contact with first Al-based plated steel sheet of second Al-based plated steel sheet
2b face not in contact with first Al-based plated steel sheet of second Al-based plated steel sheet
3 welded part
4 overlapped blank for hot stamping
4a overlapped part of overlapped blank for hot stamping
4b one-sheet part of overlapped blank for hot stamping
5 heating furnace for hot stamping
6 press metal mold for hot stamping
7 head top part
8 bent part on head top part side
9 bent part on flange side
10 vertical wall part
11 flange part
12 overlapped hot stamped component
13 surface on one side of Al-based plated steel sheet
14 Al-based plated layer
15 base material steel sheet
16 surface on one side of Al-based plated steel sheet including carbon-based black coating at upper layer of Al-based
plated layer
17 carbon-based black coating
18 surface on one side of Al-Fe-based alloy plated steel sheet
19 Al-Fe-based alloy plated layer
20 diffusion layer
21 base material steel sheet
22 surface on one side of surface plated steel sheet on one side of Al-Fe-based alloy plated steel sheet including
coating containing Zn, Ti, Cu, or V at upper portion of Al-Fe-based alloy plated layer
23 coating containing Zn, Ti, Cu, or V

**Claims**

1. An overlapped blank for hot stamping, comprising:

    a first Al-based plated steel sheet having a sheet thickness t1; and
    a second Al-based plated steel sheet having a sheet thickness t2, the second Al-based plated steel sheet
    overlapped and welded on the first steel sheet, having a smaller area than the first steel sheet, and including a
    carbon-based black coating as an upper layer of an Al-based plated layer on the side not in contact with the first Al-
    based plated steel sheet, wherein
    the overlapped blank for hot stamping satisfies (1) Expression to (5) Expression below.

$$14.0 \leq (L*1 - L*2) \times (W1/W2)^2 \leq 32.0...\text{Expression (1)}$$

$$0.86 \leq \{t1/(t1 + t2)\} \times (L*1/L*2)^2...\text{Expression (2)}$$

$$20 \leq W1a \leq 120 \qquad\qquad ...\text{Expression (3)}$$

$$20 \leq W1b \leq 120 \qquad\qquad ...\text{Expression (4)}$$

$$20 \leq W2b \leq 120 \qquad\qquad ...\text{Expression(5)}$$

Here, the following are set.

$$W1 = 0.5 \times (W1a + W1b)$$

$$W2 = 0.5 \times (W1b + W2b)$$

$$L*1 = 0.5 \times (L*1a + L*1b)$$

$$L*2 = 0.5 \times (L*1b + L*2b)$$

W1a: a coating weight of an Al-based plated layer on the surface of the side in contact with the second Al-based plated steel sheet of the first Al-based plated steel sheet

W1b = a coating weight of an Al-based plated layer on the surface of the side not in contact with the second Al-based plated steel sheet of the first Al-based plated steel sheet

W2b = a coating weight of an Al-based plated layer on the surface of the side not in contact with the first Al-based plated steel sheet of the second Al-based plated steel sheet

L*1a: lightness L* of the surface on the side in contact with the second Al-based plated steel sheet of the first Al-based plated steel sheet

L*1b: lightness L* of the surface on the side not in contact with the second Al-based plated steel sheet of the first Al-based plated steel sheet

L*2b: lightness L* of the surface on the side not in contact with the first Al-based plated steel sheet of the second Al-based plated steel sheet

Incidentally, the units of t1 and t2 are mm, and the units of W1a, W1b, W2a, and W2b are g/m$^2$.

2. The overlapped blank for hot stamping according to claim 1, satisfying Expression (6) below.

$$14.0 \leq (L*1 - L*2) \times (W1/W2)^2 \leq 30.0...\text{Expression (6)}$$

3. The overlapped blank for hot stamping according to claim 1 or 2, wherein
the first Al-based plated steel sheet includes a carbon-based black coating as an upper layer of the Al-based plated layer on the side not in contact with the second Al-based plated steel sheet.

4. The overlapped blank for hot stamping according to any one of claims 1 to 3, wherein
a film thickness of the carbon-based black coating is 0.3 to 10.0 $\mu$m.

5. The overlapped blank for hot stamping according to any one of claims 1 to 4, wherein
a total of a Zn content, a Ti content, a Cu content, and a V content of the carbon-based black coating is 0.2 to 3.0 g/m$^2$.

6. The overlapped blank for hot stamping according to any one of claims 1 to 4, further comprising:
a layer with a total of a Zn content, a Ti content, a Cu content, and a V content of 0.2 to 3.0 g/m$^2$ at an upper layer of the Al plated layer.

7. The overlapped blank for hot stamping according to any one of claims 1 to 6, wherein a nitrogen content of the carbon-based black coating is 2 to 18 mass%.

8. An overlapped hot stamped component, comprising:

a first Al-Fe-based alloy plated steel sheet having a sheet thickness T1; and
a second Al-Fe-based alloy plated steel sheet having a sheet thickness T2, the second Al-Fe-based alloy plated steel sheet overlapped and welded on the first Al-Fe-based alloy plated steel sheet and having a smaller area than the first Al-Fe-based alloy plated steel sheet, wherein
the overlapped hot stamped component satisfying relationships of Expression (7) to Expression (9) below.

$$25 \leq K1 \leq 60 ...\text{Expression (7)}$$

$$25 \leq K2 \leq 60 ...\text{Expression (8)}$$

$$0 \leq (D1 - D2) \times (K1/K2)^2 \leq 5.0 ...\text{Expression (9)}$$

Here, the following are set.
K1: an average value of a plating thickness of an Al-Fe-based alloy plated layer on the side in contact with the second Al-Fe-based alloy plated steel sheet and a plating thickness of an Al-Fe-based alloy plated layer on the side not in contact with the second Al-Fe-based alloy plated steel sheet at a non-overlapped part of the first Al-Fe-based alloy plated steel sheet
K2: a plating thickness of an Al-Fe-based alloy plated layer on the side not in contact with the first Al-Fe-based alloy plated steel sheet at an overlapped part of the second Al-Fe-based alloy plated steel sheet
D1: an average value of a thickness of a diffusion layer located to be in contact with a steel sheet base in the Al-Fe-based alloy plated layer on the side in contact with the second Al-Fe-based alloy plated steel sheet and a thickness of a diffusion layer located to be in contact with a steel sheet base in the Al-Fe-based alloy plated layer on the side not in contact with the second Al-Fe-based alloy plated steel sheet in the first Al-Fe-based alloy plated steel sheet
D2: a thickness of a diffusion layer located to be in contact with a steel sheet base in the Al-Fe-based alloy plated layer on the side not in contact with the first Al-Fe-based alloy plated steel sheet of the second Al-Fe-based alloy plated steel sheet
Incidentally, the units of the sheet thickness T1 and the sheet thickness T2 are mm, and the units of the K1, the K2, the D1, and the D2 are $\mu$m.

9. The overlapped hot stamped component according to claim 8, wherein

a layer with a total of a Zn content, a Ti content, a Cu content, and a V content of 0.2 to 3.0 g/m$^2$ is located on the Al-Fe-based alloy plated layer on the face of the side not in contact with the first Al-Fe-based alloy plated steel sheet in the second Al-Fe-based alloy plated steel sheet, and
further, a layer with a total of a Zn content, a Ti content, a Cu content, and a V content of 0 to 3.0 g/m$^2$ is located on the Al-Fe-based alloy plated layer on the face of the side not in contact with the second Al-Fe-based alloy plated steel sheet in the first Al-Fe-based alloy plated steel sheet.

[FIG. 1]

[FIG. 2]

[FIG. 3]

[FIG. 4]

[FIG. 5]

[FIG. 6]

[FIG. 7]

## INTERNATIONAL SEARCH REPORT

| | International application No. |
|---|---|
| | **PCT/JP2023/018802** |

### A. CLASSIFICATION OF SUBJECT MATTER

***B21D 22/20***(2006.01)i; ***C21D 9/00***(2006.01)i; ***C21D 9/50***(2006.01)i; ***C22C 38/00***(2006.01)i; ***C22C 38/60***(2006.01)i; ***C21D 1/18***(2006.01)i; ***C21D 1/70***(2006.01)i; ***C23C 2/12***(2006.01)i; ***C23C 2/26***(2006.01)i; ***C23C 26/00***(2006.01)i

FI:  B21D22/20 G; B21D22/20 H; C21D1/18 C; C21D1/70 E; C21D9/00 A; C21D9/50 101Z; C22C38/00 301T; C22C38/60; C23C2/12; C23C2/26; C23C26/00 A

According to International Patent Classification (IPC) or to both national classification and IPC

### B. FIELDS SEARCHED

Minimum documentation searched (classification system followed by classification symbols)

B21D22/20; C21D9/00; C21D9/50; C22C38/00; C22C38/60; C21D1/18; C21D1/70; C23C2/12; C23C2/26; C23C26/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/194308 A1 (NIPPON STEEL CORPORATION) 10 October 2019 (2019-10-10) entire text, all drawings | 1-9 |
| A | JP 2011-149084 A (NIPPON STEEL CORPORATION) 04 August 2011 (2011-08-04) entire text, all drawings | 1-9 |
| A | WO 2010/005121 A1 (NIPPON STEEL CORPORATION) 14 January 2010 (2010-01-14) entire text, all drawings | 1-9 |
| A | KR 2021-0079719 A (HYUNDAI STEEL COMPANY) 30 June 2021 (2021-06-30) entire text, all drawings | 1-9 |
| A | JP 2021-524885 A (POSCO) 16 September 2021 (2021-09-16) entire text, all drawings | 1-9 |

☐ Further documents are listed in the continuation of Box C.      ☑ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | |
| "O"  document referring to an oral disclosure, use, exhibition or other means | "Y"  document of particular relevance; the claimed invention cannot be considered to involve an inventive step when the document is combined with one or more other such documents, such combination being obvious to a person skilled in the art |
| "P"  document published prior to the international filing date but later than the priority date claimed | "&"  document member of the same patent family |

| Date of the actual completion of the international search | Date of mailing of the international search report |
|---|---|
| **04 July 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/018802**

| Patent document cited in search report | | | Publication date (day/month/year) | Patent family member(s) | | | Publication date (day/month/year) |
|---|---|---|---|---|---|---|---|
| WO | 2019/194308 | A1 | 10 October 2019 | US | 2021/0197525 | A1 | |
| | | | | entire text, all drawings | | | |
| | | | | EP | 3733321 | A1 | |
| | | | | CN | 110582359 | A | |
| | | | | CA | 3061938 | A1 | |
| | | | | KR | 10-2020-0116496 | A | |
| | | | | MX | 2020010274 | A | |
| | | | | TW | 201943867 | A | |
| JP | 2011-149084 | A | 04 August 2011 | (Family: none) | | | |
| WO | 2010/005121 | A1 | 14 January 2010 | US | 2011/0174418 | A1 | |
| | | | | entire text, all drawings | | | |
| | | | | EP | 2312005 | A1 | |
| | | | | CA | 2729942 | A1 | |
| | | | | CN | 102089451 | A | |
| | | | | MX | 2011000056 | A | |
| | | | | KR | 10-1259258 | B1 | |
| | | | | BR | PI0915898 | A2 | |
| KR | 2021-0079719 | A | 30 June 2021 | (Family: none) | | | |
| JP | 2021-524885 | A | 16 September 2021 | US | 2021/0222276 | A1 | |
| | | | | entire text, all drawings | | | |
| | | | | EP | 3805421 | A1 | |
| | | | | CN | 112218969 | A | |
| | | | | MX | 2020012957 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011088484 A
- JP 6178301 B
- JP 2016124029 A
- WO 2002103073 A
- WO 2019194308 A
- JP 2011149084 A
- WO 2010005121 A
- WO 2021172379 A